# EUROPÄISCHE PATENTSCHRIFT

(11) **EP 3 451 516 B1**
(45) Veröffentlichungstag und Bekanntmachung des Hinweises auf die Patenterteilung: **30.10.2019**
(21) Anmeldenummer: 17188658.3
(22) Anmeldetag: 30.08.2017
(51) Int. Cl.: H02K 49/04, B60T 1/12

(54) **WIRKUNGSVERÄNDERLICHE WIRBELSTROMBREMSE MIT MAGNETANORDNUNG UND INDUKTIONSANORDNUNG SOWIE MAGNETANORDNUNG UND INDUKTIONSANORDNUNG HIERFÜR**
EDDY-CURRENT BRAKE WITH VARIABLE EFFECT, WITH A MAGNET ARRAY AND INDUCTION ASSEMBLY AND MAGNET ASSEMBLY AND INDUCTION ASSEMBLY FOR SAME
FREIN À COURANTS DE FOUCAULT À FORCE VARIABLE DOTÉ DU DISPOSITIF MAGNÉTIQUE ET DU DISPOSITIF D'INDUCTION AINSI QUE DISPOSITIF MAGNÉTIQUE ET DISPOSITIF D'INDUCTION ASSOCIÉS

(43) Veröffentlichungstag der Anmeldung: 06.03.2019
(73) Patentinhaber: InTraSys GmbH Innovative Transport Systeme, 80339 München (DE)
(72) Erfinder: Urban, Bernhard, 83539 Pfaffing (DE)
(74) Vertreter: Ruttensperger Lachnit Trossin Gomoll

(56) Entgegenhaltungen:
- EP-A1- 0 469 479
- WO-A1-96/32172
- WO-A2-2010/038910
- DE-U1- 20 119 119

## Beschreibung

Die vorliegende Erfindung betrifft eine Wirbelstrombremsen-Magnetanordnung, umfassend einen wenigstens teilweise ferromagnetischen Magnetträger, welcher längs einer Folgeachse eine Mehrzahl von hintereinander angeordneten Bremsfeld-Magneten mit alternierenden, zur Folgeachse jeweils orthogonalen und zueinander parallelen Polarisierungsrichtungen trägt, wobei sich der Magnetträger von einer den Bremsfeld-Magneten nähergelegenen Magnetseite ausgehend in Richtung von den Bremsfeld-Magneten weg erstreckt und wobei sich die Bremsfeld-Magneten jeweils zwischen einer dem Magnetträger näher gelegenen Trägerseite und einer vom Magnetträger weiter entfernt gelegenen Induktionsseite erstrecken, wobei die Induktionsseite einem Induktionsbereich zugewandt ist, in welchen hinein das von der Induktionsseite ausgehende Magnetfeld der Bremsfeld-Magneten wirkt.

Die vorliegende Erfindung betrifft weiter eine Wirbelstrombremsen-Induktionsanordnung, umfassend ein flächiges, elektrisch leitendes Induktionsteil mit zwei zueinander in Dickenrichtung des Induktionsteils mit Abstand voneinander angeordneten Hauptseiten sowie ein das Induktionsteil tragendes ferromagnetisches Rückschlussbauteil, wobei das Induktionsteil mit seiner einen Hauptseite als einer Montageseite dem Rückschlussbauteil zugewandt ist und mit seiner anderen Hauptseite als einer Wirkungsseite einem Induktionsbereich zugewandt ist, in welchen hinein ein von einer mit dem Induktionsteil induktiv zusammenwirkenden Wirbelstrombremsen-Magnetanordnung ausgehendes Magnetfeld wirkt.

Schließlich betrifft die vorliegende Erfindung eine Wirbelstrombremse mit einstellbarer Bremswirkung, umfassend wenigstens eine Magnetanordnung und wenigstens eine mit dieser induktiv zusammenwirkende Induktionsanordnung, wobei die wenigstens eine Magnetanordnung und die wenigstens eine Induktionsanordnung relativ zueinander längs eines Relativbewegungspfads beweglich sind, wobei die Magnetanordnung eine Wirbelstrombremsen-Magnetanordnung gemäß der vorliegenden Erfindung ist oder/und wobei die Induktionsanordnung eine Wirbelstrombremsen-Induktionsanordnung der vorliegenden Erfindung ist.

Wirbelstrombremsen - auch als "Induktionsbremsen" bezeichnet - erzeugen eine zwischen ihren relativ zueinander bewegten Bauteilen: Magnetanordnung und Induktionsanordnung, bei vorgegebener konstruktiver Ausgestaltung und bei vorgegebenem Relativbewegungspfad von Magnetanordnung und Induktionsanordnung eine wirkende Bremskraft, welche nur abhängig von der Relativgeschwindigkeit zwischen Magnetanordnung und Induktionsanordnung ist. Wirbelstrombremsen sind daher häufig als ausfallsichere Bremsen an relativ zueinander bewegten Bauteilen vorgesehen. Besonders im Bereich der Personenbeförderung, etwa bei der Bahn oder in Fahrgeschäften in Vergnügungsparks, kommen Wirbelstrombremsen zum Einsatz, um Personenträger zu verzögern.

Da Wirbelstrombremsen jedoch bei vorgegebener Konstruktion und vorbestimmtem Relativbewegungspfad von Magnetanordnung und Induktionsanordnung stets eine nur von der Relativgeschwindigkeit der beteiligten Anordnungen abhängige Bremswirkung erzeugen, besteht bisweilen die Anforderung, die Bremswirkung einer Wirbelstrombremse veränderbar bereitzustellen.

Eine Wirbelstrombremse mit veränderbarer Bremswirkung ist beispielsweise aus der WO 96/32172 A bekannt. Dort ist ein Fallturm als Fahrgeschäft eines Vergnügungsparks offenbart, welcher Wirbelstrombremsen aufweist, um einen am Fallturmgerüst zur vertikalen Bewegung geführten Personenträger bei einer Fallbewegung in Schwerkraftwirkungsrichtung sicher abzubremsen. Der Personenträger weist dabei die Magnetanordnung auf. Am Fallturmgerüst ist die Induktionsanordnung vorgesehen. Die bei der Fallbewegung des Personenträgers erwünschte Bremswirkung der Wirbelstrombremse stört jedoch beim erneuten Anheben des Personenträgers, um diesen für einen erneuten Fallvorgang in eine erhöhte Fall-Bereitschaftsposition zu verbringen.

Die WO 96/32172 A lehrt zur Vermeidung der Bremswirkung beim Anheben des Personenträgers, während der Anhebebewegung des Personenträgers Teile der Induktionsanordnung aus dem Relativbewegungspfad von Magnetanordnung und Induktionsanordnung aus dem Wirkungsbereich des von der Magnetanordnung ausgehenden Magnetfelds herauszubewegen, um damit die erzielbare Bremswirkung der Magnetbremse zu schwächen.

Zum einen steht jedoch für die Bewegung eines Teils der Induktionsanordnung nicht immer der notwendige Bewegungsraum zur Verfügung. Zum anderen müssen Spalte in der Induktionsanordnung vorgesehen werden, um den beweglichen Teil der Induktionsanordnung relativ zum übrigen gerüstfesten Rest der Induktionsanordnung ausreichend schnell und mit geringem Kraftaufwand verlagern zu können. Hierdurch kann die Induktionsanordnung insgesamt geschwächt werden, also auch in ihrer erwünschten Bremswirkung während eines Fallvorgangs des Personenträgers.

Weiterhin ist eine schaltbare Wirbelstrombremse aus der DE 201 19 119 U1 bekannt. Diese Druckschrift geht aus von einer Wirbelstrombremse mit zwei einander gegenüberliegenden Magnetanordnungen, wobei sich die Induktionsseiten der Bremsfeld-Magneten jeder Magnetanordnung einander gegenüberliegen und zwischen diesen den Induktionsbereich definieren. Die aus der DE 201 19 119 U1 bekannte Wirbelstrombremse ist schaltbar, indem die beiden Magnetanordnungen längs ihrer parallelen Folgeachsen relativ zueinander bewegt werden zwischen einer Stellung größter Bremskraft, in welcher ungleichnamige Pole der Bremsfeld-Magneten einander über den Induktionsbereich hinweg gegenüberliegen, und einer Stellung minimaler Bremskraft, in welcher gleichnamige Pole der Bremsfeld-Magneten einander über den Induktionsbereich hinweg gegenüberliegen.

Zum einen funktioniert das in der DE 201 19 119 U1 offenbarte Schaltprinzip nur bei Wirbelstrombremsen, welche einen Induktionsbereich zwischen zwei einander gegenüberliegenden Magnetanordnungen definieren. Zum anderen verbleibt in einer der beiden Schaltstellungen, in der Regel in der Schaltstellung mit minimaler Bremskraft, an jedem Längsende der zwischen den Magnetanordnungen gebildeten Bremsstrecke ein Bremsfeld-Magnet, welchem kein Bremsfeld-Magnet der jeweils entgegengesetzten Magnetanordnung gegenüberliegt. Somit ist zwar die Bremswirkung der aus der DE 201 19 119 U1 bekannten Wirbelstrombremse veränderbar. Es verbleibt jedoch in der Schaltstellung minimaler Bremskraft an jedem Längsende der Wirbelstrombremse je ein Restmagnetfeld, welche außerdem bezüglich der Bremsstrecke asymmetrisch angeordnet sind, da an jedem Längsende einem Bremsfeld-Magneten einer anderen Magnetanordnung kein gleichnamiger Bremsfeld-Magnet gegenüberliegt. Dieses asymmetrische Restmagnetfeld führt bei Relativbewegung von Magnetanordnung und Induktionsanordnung zu erheblichen unerwünschten Querkräften oder/und Drehmomenten.

Es ist daher Aufgabe der vorliegenden Erfindung, eine Wirbelstrombremse sowie zur Bildung einer solchen Wirbelstrombremse beitragende Komponenten: Wirbelstrombremsen-Magnetanordnung und Wirbelstrombremsen-Induktionsanordnung, anzugeben, welche die oben genannten Nachteile überwinden.

Die Grundidee der vorliegenden Erfindung ist, an wenigstens einer Komponente einer Wirbelstrombremse die magnetische Flussdichte des von den Bremsfeld-Magneten ausgehenden Magnetfelds im Induktionsbereich zu verändern. Dies erfolgt durch Veränderung von wenigstens einer Magnetfluss-Bedingung an der wenigstens einen Komponente. Eine Änderung einer Magnetfluss-Bedingung verändert den magnetischen Fluss eines von einem oder mehreren Bremsfeld-Magneten ausgehenden Magnetkreises im gesamten Magnetkreis. Daher bewirkt eine Änderung einer oder mehrerer Magnetfluss-Bedingungen stets auch eine Änderung der magnetischen Flussdichte des von den Bremsfeld-Magneten ausgehenden Magnetfelds in dem der jeweiligen Komponente benachbarten Induktionsbereich. Zur Vermeidung von Störungen der Relativbewegung der Komponenten der Wirbelstrombremse erfolgt die Änderung der wenigstens einen Magnetfluss-Bedingung außerhalb des Induktionsbereichs der wenigstens einen Komponente.

Wenngleich die Magnetanordnung und die Induktionsanordnung einer Wirbelstrombremse zur Erzeugung einer Bremskraft miteinander wechselwirken, lässt sich die oben dargelegte Grundidee der vorliegenden Erfindung an nur einer Komponente einer Wirbelstrombremse realisieren. Zunächst soll die Wirbelstrom-Magnetanordnung näher betrachtet werden.

Die Aufgabe der vorliegenden Erfindung wird daher gelöst durch eine Wirbelstrombremsen-Magnetanordnung der eingangs genannten Art, welche zur Veränderung ihrer Bremswirkung Magnetfluss-Änderungsmittel umfasst, die dazu ausgebildet sind, in einem von der Induktionsseite ausgehenden und sich in Richtung zum Magnetträger hin erstreckenden Bereich der Wirbelstrombremsen-Magnetanordnung wenigstens eine Magnetfluss-Bedingung zu verändern, um dadurch die magnetische Flussdichte des von den Bremsfeld-Magneten ausgehenden Magnetfelds im Induktionsbereich zu verändern.

Der Induktionsbereich ist grundsätzlich jener Bereich jenseits der Induktionsseite der nachfolgend auch nur als "Magnetanordnung" bezeichneten Wirbelstrombremsen-Magnetanordnung, über welchen hinweg der Magnetanordnung die Induktionsanordnung einer Wirbelstrombremse während eines induktiven Bremsvorgangs gegenüberliegt. Das von der Induktionsseite ausgehende Magnetfeld der Bremsfeld-Magneten erreicht somit die Induktionsanordnung, während Magnetanordnung und Induktionsanordnung relativ zueinander aneinander parallel zur Folgeachse vorbeibewegt werden.

Die Wirkung der vorliegenden Erfindung sei an folgendem Modell erläutert: wenn die Induktionsanordnung während eines induktiven Bremsvorgangs zwei längs der Folgeachse unmittelbar aufeinander folgenden Bremsfeld-Magneten mit entgegengesetzten Polarisierungsrichtungen mit Abstand von deren Induktionsseite unter Bildung eines Luftspalts pro Bremsfeld-Magnet gegenüberliegt, bilden die beiden Bremsfeld-Magneten, der ihnen gemeinsame ferromagnetische Magnetträger, die an ihren Induktionsseiten angrenzenden Luftspalte und das ferromagnetische Rückschlussbauteil der Induktionsanordnung einen geschlossenen Magnetkreis. Das vom Rückschlussbauteil auf dessen zur Magnetanordnung hinweisender Bauteilseite getragene Induktionsteil ist bei dieser Betrachtung Teil der Luftspalte, wenn das Induktionsteil, wie bevorzugt, aus nicht-ferromagnetischem elektrisch leitendem Material gebildet ist. Dieser Magnetkreis verläuft über die Luftspalte im Induktionsbereich hinweg, welche von der Induktionsseite der Bremsfeld-Magneten bis zu der der Magnetanordnung nächstgelegenen ferromagnetischen Oberfläche der Induktionsanordnung reichen.

Je mehr Bremsfeld-Magneten längs der Folgeachse der Magnetanordnung hintereinander mit alternierenden Polarisierungsrichtungen angeordnet sind, desto mehr magnetische Kreise werden mit der der Magnetanordnung gegenüberliegenden Induktionsanordnung während einer relativen Vorbeibewegung der beiden Anordnungen geschlossen und umso höher ist die erzielbare Bremswirkung.

Zu unterscheiden ist zwischen der magnetischen Flussdichte des von den Bremsfeld-Magneten ausgehenden Magnetfelds und den oben genannten Magnetfluss-Bedingungen. Physikalisch ändert sich der magnetische Fluss eines Magnetfelds stets längs des gesamten magnetischen Kreises des betroffenen Magnetfelds. Die Ursache hierfür, nämlich eine Änderung einer Magnetfluss-Bedingung, wie etwa eines magnetischen Widerstands, muss sich dabei nicht längs des gesamten magnetischen Kreises ändern. Es reicht aus, eine Magnetfluss-Bedingung in einem magnetischen Kreis an nur einer Stelle zu ändern, um dadurch den magnetischen Fluss an jedem Ort des von dem Magnetfeld gebildeten magnetischen Kreises zu ändern. Durch Änderung des magnetischen Flusses wird die magnetische Flussdichte im Induktionsbereich geändert.

Da die wenigstens eine Magnetfluss-Bedingung gemäß dem ersten Aspekt der vorliegenden Erfindung durch die Magnetfluss-Änderungsmittel der Magnetanordnung in einem Bereich verändert wird, welcher von der Induktionsseite ausgeht und sich von dem Induktionsbereich weg, also zum Magnetträger hin, erstreckt, können die Magnetfluss-Änderungsmittel körperlich vom Induktionsbereich entfernt angeordnet sein. Dadurch kann die Bremswirkung der Magnetanordnung und damit einer Wirbelstrombremse ohne Veränderung der zwischen Magnetanordnung und Induktionsanordnung einer vorgegebenen Wirbelstrombremsenkonstruktion bestehenden Luftspalte oder ohne Eingriff in diese Luftspalte sowie ohne Lageänderung der Bremsfeld-Magneten relativ zu einem sie tragenden Gerüst verändert werden.

Wenn vorliegend ausgesagt ist, dass der Bereich, in welchem eine Veränderung der Magnetfluss-Bedingungen durch die Magnetfluss-Änderungsmittel erfolgt, sich ausgehend von der Induktionsseite zum Magnetträger hin erstreckt, soll damit abgesehen von der Induktionsseite keine konkrete Grenze verbunden sein. Grundsätzlich kann sich der genannte Bereich auch von der Induktionsseite weg über den Magnetträger hinaus erstrecken.

Der Magnetträger ist in der Regel ein flächiges Bauteil, d. h. er weist in zwei zueinander orthogonalen Raumrichtungen erheblich größere Abmessungen auf als in seiner zu jeder der beiden Raumrichtungen orthogonalen Dickenrichtung. Entsprechendes gilt für die Magnetanordnung insgesamt. Die Dickenrichtung sowohl des Magnetträgers wie auch der Magnetanordnung ist dabei parallel zu der angegebenen Erstreckungsrichtung des Bereichs von der Induktionsseite weg, zum Magnetträger hin.

Eine erste konstruktive Ausgestaltung der Grundidee der vorliegenden Erfindung liegt darin, die Masse an ferromagnetischem Material des Magnetträgers zu verändern. Je mehr ferromagnetisches Material der Magnetträger umfasst, desto höher kann der in ihm geführte magnetische Fluss sein, bis der Magnetträger in Sättigung gerät. Der Magnetträger sorgt für einen magnetischen Rückschluss der Bremsfeld-Magneten auf deren von der Induktionsseite abgewandten Seite.

Der Magnetträger trägt die Bremsfeld-Magneten in einem Tragbereich, welcher sich längs der Folgeachse zwischen den jeweils zur Folgeachse orthogonalen und von den übrigen Bremsfeld-Magneten wegweisenden Endflächen der jeweils - bezogen auf die Folgeachse - axial äußersten Bremsfeld-Magneten erstreckt und welcher sich orthogonal zur Folgeachse über die Breite der Bremsfeld-Magneten erstreckt. Der Tragbereich ist gleichsam jener ununterbrochen zusammenhängende kleinstmögliche Bereich des Magnetträgers, in welchem alle Bremsfeld-Magneten der Magnetanordnung angeordnet sind.

Zur besonders effizienten Veränderung von Magnetfluss-Bedingungen sind die Magnetfluss-Änderungsmittel der Magnetanordnung dazu ausgebildet, die Masse an ferromagnetischem Material in diesem Tragbereich des Magnetträgers zu verändern. Zur Vermeidung von Missverständnissen sei klargestellt: Längs der Folgeachse verlaufende Zwischenräume zwischen Bremsfeld-Magneten, die vom Magnetträger überbrückt werden, ohne dass sich in diesem Bereich unmittelbar ein Bremsfeld-Magnet befindet, sind Teil des Tragbereichs des Magnetträgers.

In einer konkret zur Änderung der Masse an ferromagnetischem Material im Tragbereich ausgebildeten Ausführungsform kann der Magnetträger wenigstens zweiteilig ausgebildet sein und eine Trägerbaugruppe sowie eine relativ zur Trägerbaugruppe bewegliche Steuerbaugruppe aufweisen. Beide Baugruppen: Trägerbaugruppe und Steuerbaugruppe umfassen jeweils, vorzugsweise bezogen auf das Baugruppenvolumen überwiegend, ferromagnetisches Material oder bestehen aus ferromagnetischem Material. Die Magnetfluss-Änderungsmittel können dann dazu ausgebildet sein, die Steuerbaugruppe zwischen einer weiter vom Tragbereich entfernt gelegenen Schwächungsstellung schwächerer Bremswirkung und einer näher am Tragbereich gelegenen Leitungsstellung stärkerer Bremswirkung zu verlagern. Die Anordnung der Trägerbaugruppe relativ zum Tragbereich bleibt dabei unverändert. Dies bedeutet, dass jene Teile der Trägerbaugruppe, welche zur Bildung des Tragbereichs beitragen, relativ zum Tragbereich unbewegt bleiben und stets einen gleichen Beitrag zur Bildung des Tragbereichs leisten. Bevorzugt ist die Trägerbaugruppe ortsfest relativ zu der sie tragenden Fahrsystemkomponente angeordnet. Das Fahrsystem umfasst als Komponenten eine Fahrbahnstruktur und ein sich entlang derselben bewegliches Fahrzeug.

Die Magnetfluss-Änderungsmittel können daher einen Bewegungsantrieb und eine Bewegungsführung zur Bewegung der Steuerbaugruppe relativ zur Trägerbaugruppe umfassen. Je nach Relativbewegungsrichtung von Steuerbaugruppe und Trägerbaugruppe kann die Bewegungsführung auch teilweise oder vollständig durch die Steuerbaugruppe oder/und die Trägerbaugruppe selbst gebildet sein, etwa durch Ausbildung von die Relativbewegung führenden Gleitflächen, welche berührend aneinander anliegen.

Mit Entfernung der Steuerbaugruppe vom Tragbereich und damit von der Trägerbaugruppe wird die Masse an ferromagnetischem Material des Magnetträgers, insbesondere im Tragbereich verringert, wodurch der magnetische Fluss des von den Bremsfeld-Magneten der Magnetanordnung ausgehenden Magnetfelds im gesamten magnetischen Kreis verringert werden kann.

Wird dagegen die Steuergruppe wieder näher an den Tragbereich und damit an die Trägerbaugruppe herangeführt, erhöht sich dadurch die Masse an ferromagnetischem Material im Magnetträger, weshalb der magnetische Fluss des von dem Bremsfeld-Magneten ausgehenden Magnetfelds in Bezug auf die zuvor erreichte Schwächungsstellung wieder ansteigt und somit die mit der Magnetanordnung erzielbare Bremswirkung bei ansonsten vorgegebener Wirbelstrombremskonstruktion erhöht werden kann.

Die Entfernung der Steuerbaugruppe vom Tragbereich und damit von der Trägerbaugruppe kann in unterschiedlicher Art und Weise erfolgen und unterschiedliche Wirkungen haben. Beispielsweise kann die Trägerbaugruppe derart ausgestaltet sein, dass dann, wenn sich die Steuerbaugruppe in der Schwächungsstellung befindet, wenigstens ein Abschnitt, vorzugsweise jedoch eine Mehrzahl von Abschnitten, der Trägerbaugruppe sich derart in magnetischer Sättigung befindet, dass aufgrund des lokal geringen ferromagnetischen Querschnitts des wenigstens einen gesättigten Abschnitts der in diesem Querschnitt mögliche magnetische Fluss auf einen verglichen mit der Leitungsstellung stark herabgesetzten Wert begrenzt ist. Umgekehrt ist dann, wenn sich die Steuerbaugruppe in der Leitungsstellung befindet, der wenigstens eine Abschnitt, vorzugsweise eine Mehrzahl von Abschnitten, aufgrund des dann erhöhten lokalen ferromagnetischen Querschnitts gerade noch nicht in magnetischer Sättigung.

Beispielsweise können die Bremsfeld-Magneten längs der Folgeachse mit Abstand zwischen zwei unmittelbar aufeinander folgenden Bremsfeld-Magneten angeordnet sein. Zur sicheren Befestigung der Magneten am Magnetträger kann der Magnetträger im Bereich der Bremsfeld-Magnete dicker ausgebildet sein als in einem den Spalt zwischen zwei axial aufeinander folgenden Magneten überbrückenden Bereich der Trägerbaugruppe. Dieser dünner ausgebildete Bereich kann dann, wenn sich die Steuerbaugruppe in der Schwächungsstellung befindet, in magnetischer Sättigung sein, so dass der magnetische Fluss des von den Bremsfeld-Magneten ausgehenden Magnetfelds reduziert ist. In der Leitungsstellung können die zwischen dickeren Abschnitten der Trägerbaugruppe gebildeten dünnen Überbrückungsabschnitte durch entsprechende ferromagnetische Massen der Steuerbaugruppe verstärkt sein, so dass eine Sättigung des Magnetträgers in den Bereichen zwischen zwei Bremsfeld-Magneten bei der jeweils durch Art, Stärke, Größe und Anordnung der Bremsfeld-Magneten vorgegebenen Konstruktion gerade noch nicht eintritt.

Eine lokale magnetische Sättigung ist daher ein Beispiel für eine veränderbare Magnetfluss-Bedingung der vorliegenden Anmeldung.

Alternativ oder zusätzlich kann durch die Relativbewegung von Steuerbaugruppe und Trägerbaugruppe eine Luftspaltformation an Magnetträgern verändert werden.

Beispielsweise kann der Magnetträger wenigstens dann, wenn sich die Steuerbaugruppe in der Schwächungsstellung befindet, wenigstens einen Luftspalt, vorzugsweise eine Mehrzahl von Luftspalte aufweisen, wobei das gesamte Luftspaltvolumen des Magnetträgers dann, wenn sich die Steuerbaugruppe in der Schwächungsstellung befindet, größer ist als dann, wenn sich die Steuerbaugruppe in der Leitungsstellung befindet. Dies schließt jenen Fall ein, dass der Magnetträger dann, wenn sich die Steuerbaugruppe in der Leitungsstellung befindet, ein Luftspaltvolumen von Null aufweist. Bevorzugt wird das Luftspaltvolumen dadurch erhöht, dass der Spaltabstand zwischen zwei aneinander annäherbaren und voneinander entfernbaren, einen Luftspalt begrenzenden Flächen der Steuerbaugruppe einerseits und der Trägerbaugruppe andererseits, vergrößert wird. Durch Entfernen der Steuerbaugruppe vom Tragbereich kann jedoch auch ein in der Leitungsstellung nicht oder nur in geringerem Ausmaß vorhandener Luftspalt zwischen zwei Flächen unterschiedlicher Trägerbaugruppen-Bauteile der Trägerbaugruppe gebildet oder/und vergrößert werden.

In Zweifelsfällen sind für die Bemessung eines Luftspaltvolumens eines zwischen Träger- und Steuerbaugruppe gebildeten Luftspalts jene Flächen von Trägerbaugruppe und Steuerbaugruppe maßgeblich, welche sich in der Leitungsstellung minimal einander gegenüberliegen oder sogar aneinander anliegen. Bei bezüglich der Annäherungs- und Entfernungsrichtung schräg stehenden Flächen, kann sich bei Veränderung der Luftspaltweite der Überdeckungsgrad der beiden Flächen bei Betrachtung längs einer gemeinsamen Flächennormale ändern. Um derartige Artefakte bei der Bemessung von Luftspaltvolumina zu vermeiden, sind zur Berechnung des Luftspaltvolumens eines zwischen Träger- und Steuerbaugruppe gebildeten Luftspalts stets die sich in der Leitungsstellung bei Betrachtung längs einer gemeinsamen Flächennormale überdeckenden Flächenanteile der einen Luftspalt begrenzenden Flächen heranzuziehen.

Grundsätzlich kann die Steuerbaugruppe relativ zur Trägerbaugruppe in verschiedenen Relativbewegungsrichtungen von dieser entfernbar und wieder an diese annäherbar sein. Beispielsweise können die Magnetfluss-Änderungsmittel dazu ausgebildet sein, die Steuerbaugruppe längs einer sowohl zur Folgeachse als auch zu den Polarisierungsrichtungen der Bremsfeld-Magneten orthogonalen Verlagerungsbahn relativ zur Trägerbaugruppe zu verlagern. Dies bedeutet, dass die Steuerbaugruppe in der Haupterstreckungsebene der Magnetanordnung - wenn die Folgeachse eine Längsachse definiert - seitlich von der Trägerbaugruppe entfernbar und annäherbar ist. Hierzu muss entsprechender Bewegungsraum zu wenigstens einer Seite des Magnetträgers bzw. der Magnetanordnung vorhanden sein. Die Seitenrichtung des Magnetträgers und der Magnetanordnung insgesamt ist daher, wie gewohnt, orthogonal sowohl zur Längsrichtung als auch zur Dickenrichtung, oder gleichbedeutend: orthogonal sowohl zur Folgeachse als auch zu den Polarisierungsrichtungen der Bremsfeld-Magnete.

Alternativ oder zusätzlich hierzu kann die Steuerbaugruppe längs einer Verlagerungsbahn relativ zur Trägerbaugruppe verlagerbar sein, welche längs zu einer Parallelen der Polarisierungsrichtungen der Bremsfeld-Magneten verläuft. Dann ist die Steuerbaugruppe in Dickenrichtung des Magnetträgers in der Regel in Richtung von den Bremsfeld-Magneten weg vom Magnetträger abhebbar und in entgegengesetzter Richtung wieder auf diesen aufsetzbar. Entsprechender Bewegungsraum muss daher - bei Betrachtung ausgehend von den Bremsfeld-Magneten - hinter dem Magnetträger vorhanden sein.

Weiterhin ist zusätzlich oder alternativ denkbar, dass die Steuerbaugruppe längs einer Verlagerungsbahn verlagerbar ist, deren Verlauf durch eine Kombination der beiden erstgenannten Bahnen als Bahnkomponenten entsteht. Beispielsweise kann so die Steuerbaugruppe längs einer Kreisbahn in den Magnetträger einschwenkbar und aus diesem ausschwenkbar sein.

Es sei an dieser Stelle klargestellt, dass eine Verstellung der Steuerbaugruppe relativ zur Trägerbaugruppe kontinuierlich erfolgen kann, um hierdurch zwischen Stellungen maximal erreichbarer und minimal erreichbarer Bremswirkung auch Zwischenstellungen einzustellen, bei welcher eine zwischen maximaler und minimaler Bremswirkung gelegene Zwischen-Bremswirkung erzielbar ist. Die Magnetfluss-Änderungsmittel können eine Steuer- oder Regelvorrichtung zur Ansteuerung des Bewegungsantriebs der Steuerbaugruppe aufweisen, welche die Steuerbaugruppe weg- oder zeitbasiert auch zu den genannten Zwischenstellungen verstellt.

Wie bereits oben gesagt wurde, können die Bremsfeld-Magneten längs der Folgeachse unter Bildung eines Abstandsbereichs mit Abstand voneinander angeordnet sein. Der Abstandsbereich ist dabei die Summe aller einzelnen Abstandsräume zwischen längs der Folgeachse unmittelbar aufeinander folgenden Bremsfeld-Magneten.

In dem Fall einer solchen längs der Folgeachse abstandsbehafteten Anordnung der Bremsfeld-Magneten kann eine Änderung der wenigstens einen Magnetfluss-Bedingung in dem eingangs genannten Bereich dadurch erfolgen, dass die Magnetfluss-Änderungsmittel dazu ausgebildet sind, die Masse an ferromagnetischem Material in dem Abstandsbereich der Magnetanordnung zu verändern. Der Abstandsbereich erstreckt sich in Richtung längs der Folgeachse zwischen den Bremsfeld-Magneten, erstreckt sich längs einer Parallelen zu den Polarisierungsrichtungen der Bremsfeld-Magneten zwischen Induktionsseite und Trägerseite, und erstreckt sich orthogonal zur Folgeachse und zu den Polarisierungsrichtungen über die entsprechend ausgerichtete Abmessung der Bremsfeld-Magneten.

Da mit "ferromagnetischen Material" in der vorliegenden Anmeldung ohne nähere Angabe sowohl weichmagnetisches Material als auch dauermagnetisiertes ferromagnetisches Material bezeichnet ist, können die Magnetfluss-Änderungsmittel zusätzlich oder alternativ zur Änderung der ferromagnetischen Masse in dem Abstandsbereich dazu ausgebildet sein, die Orientierung von ferromagnetischem Material zu ändern. Dies ist dann relevant, wenn das ferromagnetische Material im Abstandsbereich dauermagnetisiert ist, so dass seine Orientierung hinsichtlich seiner Wirkung auf das von den Bremsfeld-Magneten ausgehende Magnetfeld ermittelbar ist. So wie die Änderung der Orientierung von ferromagnetischem Material im Abstandsbereich eine Magnetfluss-Bedingung der Magnetanordnung und damit die magnetische Flussdichte im Induktionsbereich verändern kann, kann auch die Änderung einer Orientierung einer zusätzlich in dem Abstandsbereich angeordneten Magnetfeldquelle eine Magnetfluss-Bedingung verändern. Die Magnetfeldquelle muss dabei nicht notwendigerweise ferromagnetisches Material umfassen, sondern kann durch einen oder mehrere Elektromagneten gebildet sein.

Während die vorgenannte Steuerbaugruppe die ferromagnetische Masse in einem Bereich des Magnetträgers, also ausgehend von dessen Magnetseite in Richtung von den Bremsfeld-Magneten weg zu verändern gestattet, kann die Magnetanordnung zur Veränderung der Magnetfluss-Bedingungen alternativ oder zusätzlich eine relativ zu den Bremsfeld-Magneten bewegliche Einflussbaugruppe aufweisen. Die Magnetfluss-Änderungsmittel können daher gemäß einer bevorzugten konstruktiven Ausgestaltung der vorliegenden Erfindung dazu ausgebildet sein, die Einflussbaugruppe relativ zu den Bremsfeld-Magneten zwischen einer stärker aus dem Abstandsbereich zurückgezogenen ersten Betriebsstellung und einer stärker in den Abstandsbereich eingefahrenen zweiten Betriebsstellung zu verlagern. In diesem Fall weist die Einflussbaugruppe ferromagnetische Einflussbauteile auf, welche in einzelne Abstandsräume zwischen längs der Folgeachse unmittelbar aufeinander folgenden Bremsfeld-Magneten einfahrbar und aus diesen zurückziehbar sind.

Dann, wenn diese ferromagnetischen Einflussbauteile weichmagnetisch, also unmagnetisiert-ferromagnetisch sind, ist die mit der Magnetanordnung erzielbare Bremswirkung in der zweiten Betriebsstellung schwächer als in der ersten Betriebsstellung, da in die Abstandsräume zwischen den Bremsfeld-Magneten stärker eingefahrene weichmagnetische Einflussbauteile einen magnetischen Kurzschluss der jeweiligen Bremsfeld-Magneten bewirken und somit das von dem Bremsfeld-Magneten ausgehende Magnetfeld im Induktionsbereich bzw. dessen magnetische Flussdichte schwächen.

Konstruktiv können die Magnetfluss-Änderungsmittel dazu ausgebildet sein, während einer Verlagerung der Einflussbaugruppe zwischen der ersten und der zweiten Betriebsstellung die Einragtiefe der Einflussbaugruppe in den Abstandsbereich zu verändern. Bezogen auf die einzelnen Einflussbauteile der Einflussbaugruppe bedeutet dies, dass deren Einragtiefe in den dem jeweiligen Einflussbauteil zugeordneten Abstandsraum verändert wird. Auch dies kann bevorzugt kontinuierlich zwischen einer vollständig in die jeweiligen Abstandsräume eingefahrenen und einer vollständig aus dem Abstandsbereich zurückgezogenen Stellung erfolgen, um die Bremswirkung auch auf beliebige zwischen minimaler und maximaler Bremswirkung gelegene Zwischen-Bremswirkungen einstellen zu können. Auch hierfür können die Magnetfluss-Änderungsmittel einen Bewegungsantrieb und eine Bewegungsführung aufweisen, so dass die Einflussbaugruppe durch die Bewegungsführung zur Bewegung zwischen der ersten und der zweiten Betriebsstellung geführt ist und durch den Bewegungsantrieb zu dieser Bewegung antreibbar ist.

Der Unterschied zwischen minimal und maximal erzielbarer Bremswirkung der Magnetanordnung und damit der sie aufweisenden Wirbelstrombremse kann dadurch erhöht werden, dass die Einflussbaugruppe und die vorgenannte Steuerbaugruppe zur gemeinsamen Bewegung gekoppelt sind. Dies kann derart realisiert sein, dass mit einer Verlagerung der Steuerbaugruppe zwischen ihrer Schwächungsstellung und ihrer Leitungsstellung eine Verstellung der Einflussbaugruppe zwischen ihrer ersten und ihrer zweiten Betriebsstellung erfolgt. Dabei sind Einflussbaugruppe und Steuerbaugruppe sinnvollerweise derart gekoppelt, dass jene Betriebsstellung der Einflussbaugruppe: erste oder zweite Betriebsstellung, welche die schwächere Bremswirkung der Magnetanordnung bewirkt, dann vorliegt, wenn die Steuerbaugruppe sich in ihrer Schwächungsstellung befindet. Entsprechendes gilt für die Zuordnung der Betriebsstellung der Einflussbaugruppe mit der höheren Bremswirkung und der Leitungsstellung der Steuerbaugruppe.

Dann, wenn wenigstens ein Einflussbauteil der Einflussbaugruppe dauermagnetisiertes ferromagnetisches Material umfasst oder aus einem solchen Material besteht, ist dieses abweichend von den Bremsfeld-Magneten magnetisch mit zur Folgeachse paralleler Polarisierungsrichtung polarisiert. Daher trägt das von einem derart dauermagnetisierten Einflussbauteil ausgehende Magnetfeld nicht unmittelbar, sondern mittelbar durch Beeinflussung des Bremsmagneten-Magnetfelds, zur Bremswirkung der Magnetanordnung bei.

Gemäß einer weiteren möglichen konstruktiven Ausgestaltung der eingangs vorgestellten vorliegenden Erfindung kann die Magnetanordnung in längs der Folgeachse aufeinander folgenden Abstandsräumen zwischen längs der Folgeachse aufeinander folgenden Bremsfeld-Magneten je wenigstens eine Fluss-Beeinflussungsmagnetformation aufweisen, wobei die Magnetfluss-Änderungsmittel dazu ausgebildet sind, die Orientierung der von den Fluss-Beeinflussungsmagnetformationen ausgehenden Magnetfelder relativ zu den Bremsfeld-Magneten zu verändern. Die Fluss-Beeinflussungsmagnetformation unterscheidet sich schon dadurch von den Bremsfeld-Magneten, dass das das von ersterer ausgehende Magnetfeld in seiner Orientierung veränderbar ist, während die Orientierung der Polarisierungsrichtungen der einzelnen Bremsfeld-Magneten relativ zum Magnetträger konstant ist. Eine Fluss-Beeinflussungsmagnetformation kann unabhängig von ihrer Relativbeweglichkeit relativ zu den Bremsfeld-Magneten eine oder mehrere Fluss-Beeinflussungsmagnete aufweisen.

Die Änderung der Orientierung der von den Fluss-Beeinflussungsmagnetformationen ausgehenden Magnetfelder kann beispielsweise dadurch erfolgen, dass die Fluss-Beeinflussungsmagnetformationen längs einer Bewegungsbahn relativ zu den Bremsfeld-Magneten beweglich sind, wobei jede Fluss-Beeinflussungsmagnetformation wenigstens zwei längs der Bewegungsbahn aufeinander folgende Fluss-Beeinflussungsmagnete unterschiedlicher Polarisationsrichtungen aufweist, wobei die Magnetfluss-Änderungsmittel dazu ausgebildet sind, die parallelen Fluss-Beeinflussungsmagnetformationen längs der Bewegungsbahn derart zu bewegen, dass mit der Bewegung eines jeweiligen ersten Fluss-Beeinflussungsmagneten aus seinem Aufnahmeraum heraus ein jeweiliger zweiter Fluss-Beeinflussungsmagnet der Fluss-Beeinflussungsmagnetformationen mit von jener des ersten Fluss-Beeinflussungsmagneten abweichender Polarisierungsrichtung in den Aufnahmeraum hineinbewegt wird. Bevorzugt sind die Polarisierungsrichtungen von erstem und zweitem Fluss-Beeinflussungsmagnet ein- und derselben Fluss-Beeinflussungsmagnetformation entgegengesetzt gerichtet. Dann kann ein maximaler Bremswirkungsunterschied der Magnetanordnung und damit der sie aufweisenden Wirbelstrombremse erreicht werden, wenn in den Extremstellungen der Fluss-Beeinflussungsmagnetformation einmal nur der erste und ein andermal nur der zweite Fluss-Beeinflussungsmagnet vollständig in einen Abstandsraum eingefahren ist.

Abweichend von der translatorischen Bewegung wenigstens eines Paars aus ersten und zweiten Fluss-Beeinflussungsmagneten in der Regel längs einer Bewegungsbahn orthogonal sowohl zur Folgeachse als auch zur Polarisierungsrichtung der Brems-Magnete kann die Änderung einer Orientierung der Fluss-Beeinflussungsmagnetformation auch dadurch erfolgen, dass die Fluss-Beeinflussungsmagnetformationen jeweils um eine Rotationsachse relativ zu den Bremsfeld-Magneten rotierbar sind, wobei die Magnetfluss-Änderungsmittel dazu ausgebildet sind, die Fluss-Beeinflussungsmagnetformationen um ihre jeweilige Rotationsachse zu rotieren, um dadurch die Orientierung des von ihnen ausgehenden Magnetfelds relativ zu den Bremsfeld-Magneten zu ändern. Hierzu sind die Rotationsachsen der einzelnen Fluss-Beeinflussungsmagnetformationen bevorzugt parallel, sodass ein einziger Bewegungsantrieb und ein einziges Kopplungsbauteil, etwa eine mit Ritzeln der Fluss-Beeinflussungsmagnetformationen kämmende Zahnstange oder eine Kopplungsstange, welche von den jeweiligen Rotationsachsen radial abstehende Bewegungshebel der Fluss-Beeinflussungsmagnetformationen verbindet, ausreichen kann, um die Orientierung der Fluss-Beeinflussungsmagnetformationen rotatorisch zu ändern.

Bevorzugt sind die längs der Folgeachse aufeinander folgenden Fluss-Beeinflussungsmagnetformationen ebenso wie die Bremsfeld-Magnete mit alternierenden Polarisierungsrichtungen angeordnet, und zwar besonders bevorzugt unabhängig von ihrer Betriebsstellung. Dann, wenn die Fluss-Beeinflussungsmagnetformationen, wie oben dargestellt, einen ersten und einen auf den ersten in einer Richtung orthogonal sowohl zur Folgeachse als auch zu den Polarisierungsrichtungen der Bremsfeld-Magneten folgenden zweiten Fluss-Beeinflussungsmagneten aufweisen, sind die längs der Folgeachse aufeinander folgenden ersten Fluss-Beeinflussungsmagneten mit alternierenden Polarisierungsrichtungen angeordnet und sind die längs der Folgeachse aufeinander folgenden zweiten Fluss-Beeinflussungsmagneten mit alternierenden Polarisierungsrichtungen angeordnet.

Gemäß einer weiteren konstruktiven Ausgestaltungsmöglichkeit kann die Magnetanordnung an den Bremsfeld-Magneten oder/und in längs der Folgeachse aufeinander folgenden Abstandsräumen zwischen längs der Folgeachse aufeinander folgenden Bremsfeld-Magneten je wenigstens einen Magnetfluss-beeinflussenden Elektromagneten aufweisen, wobei die Magnetfluss-Änderungsmittel dazu ausgebildet sind, die Bestromung der Elektromagneten hinsichtlich Betrag oder/und Polarität zu verändern.

Dabei kann zum einen durch entsprechende Änderung der Bestromung der Elektromagneten unmittelbar das von diesen ausgehende Magnetfeld geändert werden, um durch die längs der Folgeachse zwischen den Bremsfeld-Magneten angeordneten Elektromagneten in gleicher Weise Einfluss auf das von den Bremsfeld-Magneten ausgehende Magnetfeld zu nehmen, wie das oben in Bezug auf die dauermagnetisierten Einflussbauteile oder Fluss-Beeinflussungsmagnetformationen beschrieben wurde.

Sofern in der vorliegenden Anmeldung von einem Magneten die Rede ist, ist damit stets ein Permanentmagnet bezeichnet; es sei denn es ist ein Elektromagnet ausdrücklich erwähnt. Entsprechend bezeichnet der Begriff "Magnetformation", sofern nicht ausdrücklich von einer Elektromagnetformation die Rede ist, in der vorliegenden Anmeldung eine Permanentmagnetformation.

Ebenso können jedoch die Elektromagneten zusätzlich zu den Fluss-Beeinflussungsmagnetformationen vorgesehen sein, wobei die Elektromagneten dann dazu vorgesehen sind, mit den von ihnen ausgehenden Magnetfeldern hauptsächlich Einfluss auf die Fluss-Beeinflussungsformationen oder/und auf die Bremsfeld-Magnete zu nehmen, um eine Änderung der Orientierung der Fluss-Beeinflussungsformationen zu erleichtern. Dementsprechend können die Magnetfluss-Änderungsmittel dazu ausgebildet sein, die Elektromagneten wenigstens vorübergehend zu bestromen, um die zur Veränderung der Betriebsstellung der Fluss-Beeinflussungsmagnetformationen notwendige Kraft oder/und das zu ihrer Rotation notwendige Drehmoment betragsmäßig zu verringern.

Beispielsweise kann ein Elektromagnet derart vorgesehen sein, dass seine Wicklungen einen Bremsfeld-Magneten umgeben, wobei die Wicklungsachse des Elektromagneten mit der Polarisierungsrichtung des umgebenen Bremsfeld-Magneten zusammenfällt. Dann kann durch Bestromung des Elektromagneten das Magnetfeld des Bremsfeld-Magneten derart geschwächt werden, dass eine Änderung einer Orientierung von Fluss-Beeinflussungsmagnetformationen in Abstandsräumen neben den umwickelten Bremsfeld-Magneten eine geringere Kraft bzw. ein geringeres Drehmoment erfordert als ohne Bestromung des Elektromagneten. Ebenso kann ein Elektromagnet in Gestalt einer Wicklungsspule jenen Bauraum umgeben, in welchem eine Fluss-Beeinflussungsmagnetformation beweglich, insbesondere um eine Rotationsachse drehbar aufgenommen ist. Wiederum kann durch Bestromung des Elektromagneten die zur Bewegung der umgebenen Fluss-Beeinflussungsmagnetformation erforderliche Kraft bzw. das erforderliche Drehmoment herabgesetzt werden.

Gemäß einem weiteren Aspekt der vorliegenden Erfindung, welcher mit dem obigen ersten Aspekt inhaltlich unmittelbar zusammenhängt, wird die eingangs genannte Aufgabe auch dadurch gelöst, dass eine Wirbelstrombremsen-Induktionsanordnung der eingangs genannten Art zur Veränderung ihrer Bremswirkung Induktionswirkungs-Änderungsmittel umfasst, welche dazu ausgebildet sind, in einem sich ausgehend von der Wirkungsseite in Richtung zum Rückschlussbauteil erstreckenden Bereich der Wirbelstrombremsen-Induktionsanordnung wenigstens eine Magnetfluss-Bedingung zu verändern, insbesondere die Magnetfeld führende ferromagnetische Masse des Rückschlussbauteils zu verändern, um dadurch die magnetische Flussdichte eines Magnetfelds im Induktionsbereich zu verändern und so die bei vorgegebener Wirbelstrombremsen-Magnetanordnung und vorgegebenen Betriebsbedingungen mit der Wirbelstrombremsen-Induktionsanordnung erzielbare Induktionswirkung zu verändern.

Für die Veränderung der das Magnetfeld führenden ferromagnetischen Masse des Rückschlussbauteils gilt das oben zur Veränderung der Masse an ferromagnetischem Material des Magnetträgers der Magnetanordnung Gesagte mutatis mutandis entsprechend, mit der Maßgabe, dass an die Stelle des Magnetträgers im Text das Rückschlussbauteil tritt, dass an die Stelle der Magnetfluss-Änderungsmittel die Induktionswirkungs-Änderungsmittel treten, dass an die Stelle der Wirbelstrombremsen-Magnetanordnung die Wirbelstrombremsen-Induktionsanordnung tritt, dass an die Stelle Bremsfeld-Magneten das Induktionsteil tritt, dass an die Stelle der Induktionsseite die Wirkungsseite tritt und dass an die Stelle der Trägerseite die Montageseite tritt. Die für die Magnetanordnung angegebene Richtung von der Induktionsseite weg zum Magnetträger hin ist für die Induktionsanordnung eine Richtung von der Wirkungsseite weg zum Rückschlussbauteil hin.

Weiter wird die Aufgabe der vorliegenden Erfindung auch gelöst durch eine Wirbelstrombremse mit einer Magnetanordnung und mit einer Induktionsanordnung, wobei die Magnetanordnung gemäß der oben beschriebenen Wirbelstrombremsen-Magnetanordnung ausgebildet ist oder/und wobei die Induktionsanordnung gemäß der zuvor beschriebenen Wirbelstrombremsen-Induktionsanordnung angeordnet ist.

Die Wirbelstrombremse kann auch zwei Magnetanordnungen der oben beschriebenen Art aufweisen, welche zwischen sich einen Induktionsbereich definieren und mit den Induktionsseiten ihrer jeweiligen Bremsfeld-Magnete aufeinander zu weisend einander gegenüberliegen. Bevorzugt liegen dann ungleichnamige Pole von Bremsfeld-Magneten einander über den Induktionsbereich hinweg gegenüber. In diesem Fall einer Wirbelstrombremse mit Doppel-Luftspalten beiderseits der relativ zur Magnetanordnung den Induktionsbereich durchfahrenden Induktionsanordnung benötigt die Induktionsanordnung kein Rückschlussbauteil. Das Induktionsteil alleine ist dann zur effektiven Erzielung einer Bremswirkung ausreichend.

Ein wesentlicher Vorteil der vorliegenden Erfindung liegt jedoch darin, dass sie eine Veränderung der Bremswirkung einer Wirbelstrombremse ermöglicht, bei welcher der Induktionsbereich nur auf einer Seite des Induktionsteils existiert, bei welcher also im Betrieb der Wirbelstrombremse nur auf einer Seite der Induktionsanordnung Luftspalte zwischen Magnet- und Induktionsanordnung vorhanden sind. In diesem Fall weist die Induktionsanordnung zur Erhöhung der Effizienz der Wirbelstrombremse das oben genannte Rückschlussbauteil auf, wobei besonders bevorzugt das Rückschlussbauteil mit veränderlicher ferromagnetischer Masse ausgebildet ist.

Ganz allgemein können die Magnetfluss-Änderungsmittel oder die Induktionswirkungs-Änderungsmittel zur Erfüllung ihrer gemäß der vorliegenden Anmeldung zugedachten Aufgabe einen Bewegungsantrieb und eine Bewegungsführung aufweisen, so dass ein durch die Änderungsmittel zu bewegendes Bauteil oder eine solche Baugruppe durch die Bewegungsführung zur Bewegung, insbesondere zwischen zugeordneten Betriebsstellungen, geführt ist und durch den Bewegungsantrieb zu dieser Bewegung antreibbar ist. Der Bewegungsantrieb kann im einfachsten Fall durch einen Schalter betätigbar sein, der durch eine Formation eines mit einer Komponente der Wirbelstrombremse zur gemeinsamen Bewegung verbundenen Fahrzeugs auslösbar ist. Für eine flexiblere Betätigung des Bewegungsantriebs können die Änderungsmittel eine Steuer- oder Regelvorrichtung aufweisen. Diese kann Teil einer übergeordneten Fahrsteuerung/regelung sein, die einen Fahrbetrieb von wenigstens einem mit der vorliegenden Wirbelstrombremse gebremsten Fahrzeug steuert, oder mit dieser signalübertragend zusammenwirken.

Die Bewegungsführung kann eine Wälzführung oder/und Gleitführung sein.

Ganz allgemein kann ein Bewegungsantrieb der Magnetfluss-Änderungsmittel oder die Induktionswirkungs-Änderungsmittel je nach Bedarf ein translatorischer oder ein rotatorischer Bewegungsantrieb sein, etwa ein fluidmechanischer oder elektrischer Antrieb. Gegebenenfalls kann der Bewegungsantrieb ein Getriebe umfassen, um eine Bewegung eines Ausgabeglieds des Antriebs in eine für den Antrieb eines Bauteils vorteilhaftere Antriebsbewegung zu übertragen.

Die vorliegende Erfindung wird nachfolgend anhand der beiliegenden Figuren erläutert. Es stellt dar:
- Figur 1: eine grobschematische Seitenansicht eines schienengeführten Personenträgers mit einer Wirbelstrombremse der vorliegenden Anmeldung,
- Figur 2: eine erste Ausführungsform einer Magnetanordnung der vorliegenden Anmeldung in einer Betriebsstellung stärkerer Bremswirkung,
- Figur 3: die Magnetanordnung von Figur 2 in einer Betriebsstellung schwächerer Bremswirkung,
- Figur 4A: eine Unteransicht einer zweiten Ausführungsform einer Magnetanordnung der vorliegenden Anmeldung in einer Betriebsstellung stärkerer Bremswirkung,
- Figur 4B: eine Längsschnittansicht durch die Magnetanordnung von Figur 4A längs der Schnittebene IVB-IVB von Figur 4A,
- Figur 5A: die Ausführungsform einer Magnetanordnung von Figur 4A in einer Betriebsstellung schwächerer Bremswirkung,
- Figur 5B: eine Längsschnittansicht durch die Magnetanordnung von Figur 5A längs der Schnittebene VB-VB von Figur 5A,
- Figur 6A: eine dritte Ausführungsform einer Magnetanordnung der vorliegenden Anmeldung in ihrer Stellung stärkerer Bremswirkung,
- Figur 6B: eine Längsschnittansicht durch die Anordnung von Figur 6A längs der Schnittebene VIB-VIB von Figur 6A,
- Figur 7A: die Ausführungsform von Figur 6A in ihrer Betriebsstellung schwächerer Bremswirkung,
- Figur 7B: eine Längsschnittansicht durch die Anordnung von Figur 7A längs der Schnittebene VIIB-VIIB von Figur 7A,
- Figur 8A: eine vierte Ausführungsform einer Magnetanordnung der vorliegenden Anmeldung in ihrer Betriebsstellung stärkerer Bremswirkung,
- Figur 8B: die Anordnung von Figur 8A in ihrer Betriebsstellung schwächerer Bremswirkung,
- Figur 9A: eine modifizierte vierte Ausführungsform einer Magnetanordnung der vorliegenden Anmeldung,
- Figur 9B: eine weiter modifizierte vierte Ausführungsform einer Magnetanordnung der vorliegenden Anmeldung,
- Figur 10: eine fünfte Ausführungsform einer Magnetanordnung der vorliegenden Anmeldung und
- Figur 11: eine erfindungsgemäße Ausführungsform einer Induktionsanordnung der vorliegenden Anmeldung in einer Betriebsstellung schwächerer Bremswirkung.

Es wird ausdrücklich darauf hingewiesen, dass die Figuren der vorliegenden Anmeldung nicht maßstabsgerecht sind und auch Abmessungen von Relativbewegungswegen einzelner Baugruppen relativ zueinander nicht maßstabsgetreu wiedergeben. Die Darstellungen sind grobschematisch und dienen allein der grundsätzlichen Vermittlung von technischen Zusammenhängen der vorliegenden Erfindung.

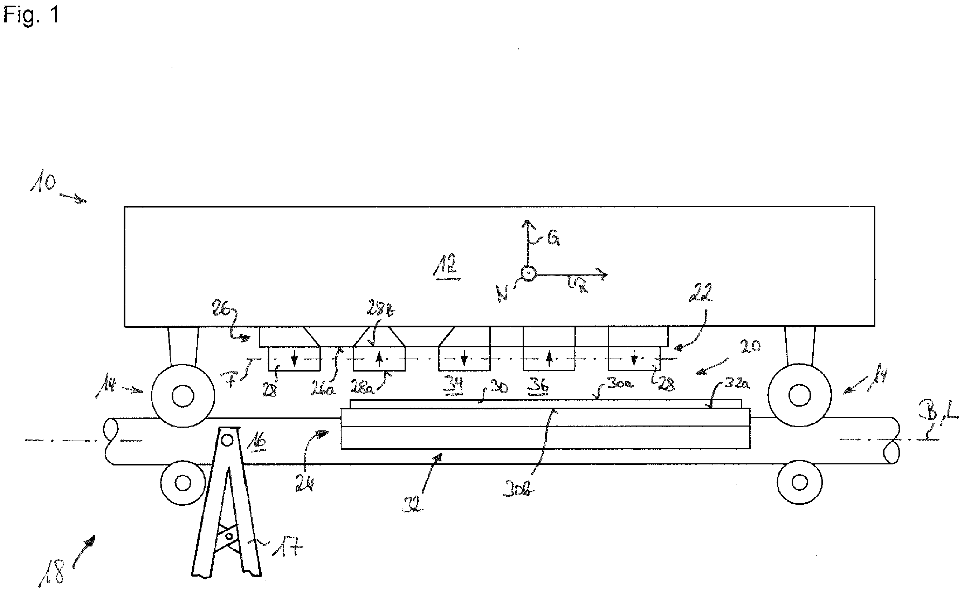

In Figur 1 ist in einer grobschematischen Seitenansicht ein schienengeführtes Fahrzeug 10 gezeigt, wie es beispielsweise als Fahrzeug eines Fahrgeschäfts in einem Vergnügungspark verwendet werden kann, beispielsweise in einer Achterbahn, einer Geisterbahn und dergleichen. Das Fahrzeug 10 weist einen Personenträger 12 auf, welcher über Radanordnungen 14 längs einer Schiene 16 beweglich geführt ist.

Die Schiene 16 ist Teil eines Schienensystems mit parallel verlaufenden Schienen 16, sodass das Fahrzeug 10 nicht um die Längsachse der dargestellten Schiene 16 drehen kann. Die andere Schiene des Schienensystems liegt hinter der dargestellten Schiene 16 und ist durch diese verdeckt. Die Radanordnungen 14 hintergreifen die Schiene 16 und verhindern so ein Abheben des Fahrzeugs 10 von der Schiene 16 in an sich bekannter Weise.

Die Schiene 16 ist an ein bodenfestes Gerüst 17 gebunden und bildet somit ein ortsfestes Bezugssystem.

Zur Verzögerung des Personenträgers 12 relativ zur Schiene 16 weist das das Fahrzeug 10 und die Schiene 16 umfassende Fahrsystem 18 eine Wirbelstrombremse 20 auf.

Die Wirbelstrombremse 20 weist eine Magnetanordnung 22 auf, welche beispielhaft zur gemeinsamen Bewegung mit dem Personenträger 12 an diesem befestigt dargestellt ist, welche jedoch abweichend von der Darstellung von Figur 1 auch streckenfest mit der Schiene 16 unmittelbar oder mittelbar über das die Schiene 16 tragende Gerüst 17 verbunden sein kann.

Die Wirbelstrombremse 20 weist außerdem eine Induktionsanordnung 24 auf, welche im Anwendungsbeispiel von Figur 1 streckenfest an der Schiene 16 oder an dem die Schiene 16 tragenden Gerüst 17 befestigt ist, welche jedoch dann, wenn die Magnetanordnung 22 schienenfest befestigt ist, zur gemeinsamen Bewegung mit dem Personenträger 12 verbunden sein kann.

Die Magnetanordnung 22 weist einen Magnetträger 26 auf, an dessen im Betrieb zur Induktionsanordnung 24 hinweisenden Magnetseite 26a längs einer zur Zeichenebene von Figur 1 parallelen und zur Bewegungsbahn B des Fahrzeugs 10 parallelen Folgeachse F eine Mehrzahl von Bremsfeld-

Die Bewegungsbahn B des Fahrzeugs 10 ist - wie für schienengebundene Fahrzeuge üblich - mit der Längsachse L der Schiene 16 identisch. An Orten, in welchen die Schiene 16 einen gekrümmten Bahnverlauf hat, ist die Folgeachse F parallel zu einer Tangente an die gekrümmte Längsachse L der Schiene 16. Der Übersichtlichkeit halber ist nur der längs der Folgeachse F erste und der letzte Bremsfeld-Magnet mit Bezugszeichen 28 versehen.

Die Polarisationsrichtung der einzelnen Bremsfeld-Magneten 28 ist mit einem Pfeil dargestellt, der innerhalb des dargestellten Magneten 28 die kürzeste Entfernung des magnetischen Nordpols vom magnetischen Südpol des jeweiligen Bremsfeld-Magneten 28 angibt. Die durch die einzelnen Pfeile der Bremsfeld-Magneten 28 angegebenen Polarisierungsrichtungen sind parallel zur Zeichenebene von Figur 1 und sind orthogonal zur Folgeachse F. Die Folgeachse F und die Polarisierungsrichtungen der Bremsfeld-Magneten 28 spannen somit eine Ebene auf, welche parallel zur Zeichenebene der Figur 1 orientiert ist und welche in Bezug auf ein fahrzeugeigenes Koordinatensystem orthogonal zur Nickachse N und parallel zu sowohl der Rollachse R wie auch zur Gierachse G des Fahrzeugs 10 ist.

Jeder Bremsfeld-Magnet 28 erstreckt sich zwischen einer vom Magnetträger 26 fern liegenden Induktionsseite 28a längs seiner Polarisierungsrichtung bis zu einer dem Magnetträger 26 näher liegenden Trägerseite 28b. Zur Bereitstellung möglichst gleichmäßig bemessener Luftspalte zwischen Magnetanordnung 22 und Induktionsanordnung 24 liegen die Induktionsseiten 28a der einzelnen Bremsfeld-Magneten 28 in einer gemeinsamen Ebene, welche parallel zur Folgeachse F ist und im vorliegenden Ausführungsbeispiel orthogonal zur Zeichenebene von Figur 1 ausgerichtet ist, d. h. beispielsweise orthogonal zur Gierachse G des Fahrzeugs ausgerichtet ist.

Auch die Trägerseiten 28b liegen bevorzugt auf einer gemeinsamen Ebene, welche zu jener der Induktionsseiten 28a parallel ist. Dies ermöglicht die Ausbildung eines Magnetträgers 26 mit ebener Magnetseite 26a. Mit anderen Worten: Die Bremsfeld-Magneten 28 des Fahrzeugs 10 sind im vorliegenden Beispiel bevorzugt gleich dick, wobei die Dickenrichtung parallel zu den Polarisationsrichtungen verläuft.

Die Induktionsanordnung 24 weist ein elektrisch leitendes Induktionsteil 30 auf, welches bevorzugt als ebene Platte ausgeführt ist. Das Induktionsteil 30 ist an ein Rückschlussbauteil 32 montiert, welches ebenso ferromagnetisches Material umfasst oder bevorzugt aus ferromagnetischem Material gebildet ist wie der Magnetträger 26.

Das Induktionsteil 30 erstreckt sich von einer vom Rückschlussbauteil weiter entfernt gelegenen Wirkungsseite 30a in Dickenrichtung bis zu einer dem Rückschlussbauteil 32 näher gelegenen Montageseite 30b. Mit seiner dem Rückschlussbauteil 32 zugewandten Montageseite 30b liegt das Induktionsteil 30 auf einer Lagerungsseite 32a des Rückschlussbauteils 32 auf und ist am Rückschlussbauteil 32 befestigt.

Zwischen der Induktionsseite 28a der Bremsfeld-Magneten 28 und der Wirkungsseite 30a des Induktionsteils 30 liegt ein Induktionsbereich 34 der Wirbelstrombremse 20 bzw. seiner Komponenten: Magnetanordnung 22 und Induktionsanordnung 24. Ganz allgemein gilt: Der Induktionsbereich 34 liegt bezüglich der Magnetanordnung 22 außerhalb der Magnetanordnung 22 jenseits der Induktionsseite 28a der Bremsfeld-Magneten 28, also auf der vom Magnetträger 26 weg weisenden Seite der Bremsfeld-Magneten 28.

Ebenso liegt der Induktionsbereich 34 bezüglich der Induktionsanordnung 24 außerhalb der Induktionsanordnung 24 jenseits der Wirkungsseite 30a des Induktionsteils, also auf der vom Rückschlussbauteil 32 weg weisenden Seite des Induktionsteils 30. Ein Induktionsbereich 34 ist daher auch für die einzelnen Komponenten der Wirbelstrombremse 20 definiert, selbst wenn diese aufgrund der herrschenden Bewegungssituation des Fahrzeugs 10 relativ zur Schiene 16 oder aufgrund von Demontage einander nicht gegenüberliegen.

Dann, wenn die Magnetanordnung 22 und die Induktionsanordnung 24 einander gegenüberliegen, sind zwischen den beiden Anordnungen 22 und 24 Luftspalte 36 gebildet, welche von den jeweiligen Induktionsseiten 28a der Bremsfeld-Magneten 28 bis zur nächstgelegenen ferromagnetischen Oberfläche der Induktionsanordnung 24 reichen. Dann, wenn das Induktionsteil 30 aus ferromagnetischem Material hergestellt ist, ist dies die Wirkungsseite 30a. Dann, wenn das Induktionsteil, wie es bevorzugt ist, aus nicht-ferromagnetischem elektrisch leitendem Material hergestellt ist, etwa aus Kupfer oder Aluminium, ist dies die Lagerungsseite 32a des Rückschlussbauteils 32.

Die Bremswirkung der Wirbelstrombremse 20 und damit der einzelnen Komponenten 22 und 24 ist in dem dargestellten Ausführungsbeispiel veränderbar. Zu diesem Zweck ist der Magnetträger 26 mehrteilig ausgebildet. Zu diesem Zweck ist zusätzlich oder alternativ das Rückschlussbauteil 32 mehrteilig ausgebildet.

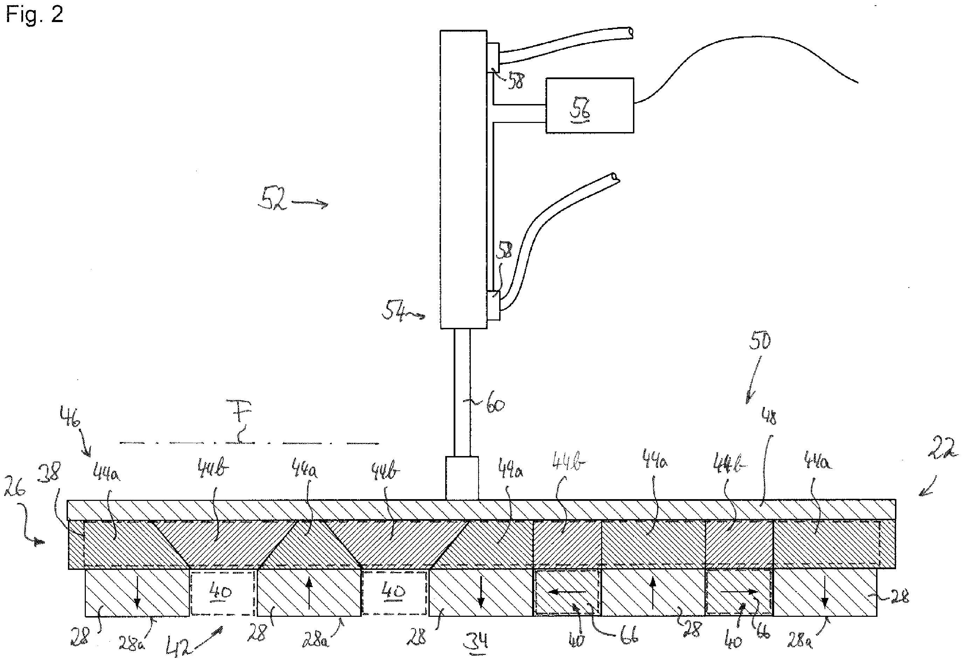

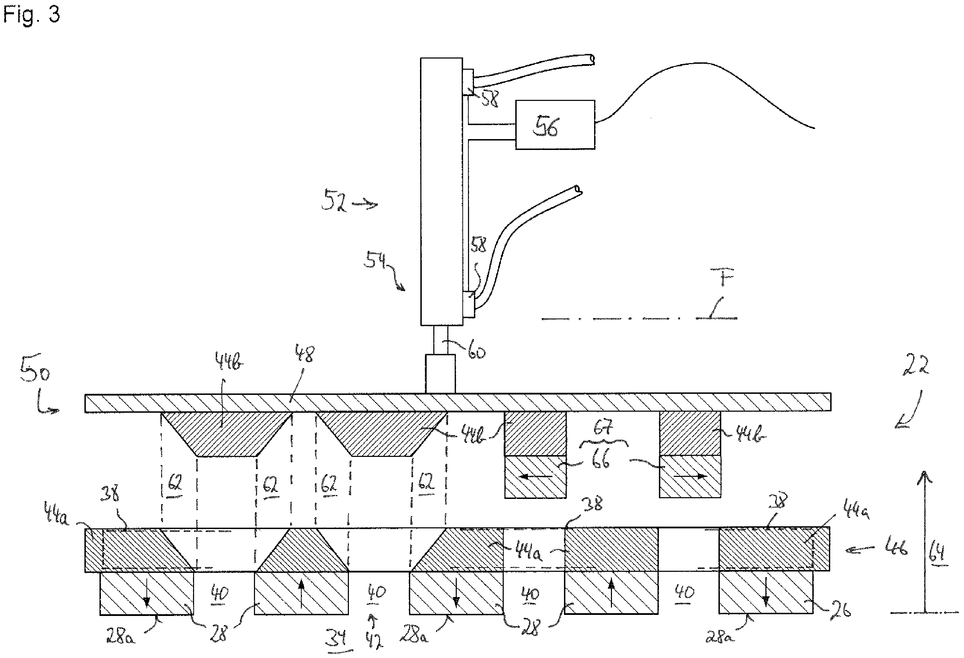

Die Figuren 2 und 3 zeigen eine erste Ausführungsform der Magnetanordnung 22 mit veränderlicher Bremswirkung, um damit eine veränderliche Bremswirkung an der Wirbelstrombremse 20 zu erzielen, welche unter Beteiligung der Magnetanordnung 22 gebildet ist.

Figur 2 zeigt eine Längsschnittansicht durch die Magnetanordnung 22 mit dem Magnetträger 26 und den Bremsfeld-Magneten 28.

Ein Tragbereich 38 des Magnetträgers 26 ist strichliniert im Magnetträger 26 markiert und bezeichnet jenen zusammenhängenden Bereich des Magnetträgers 26, welcher tatsächlich Bremsfeld-Magnete 28 trägt. Abstandsräume 40 zwischen in Richtung der Folgeachse F unmittelbar aufeinander folgenden Bremsfeld-Magneten 28 unterbrechen den Tragbereich 38 nicht. Die Summe aller Abstandsräume 40 bildet einen Abstandsbereich 42 der Magnetanordnung 22. Der Abstandsbereich 42 ist durch die Bremsfeld-Magnete 28 unterbrochen.

Der ferromagnetische Magnetträger 26 umfasst ferromagnetische Magnetträger-Bauteile 44a, welche tatsächlich Bremsfeld-Magnete 28 tragen, und ferromagnetische Magnetträger-Bauteile 44b, welche keine Bremsfeld-Magnete 28 tragen. Die Bremsfeld-Magnete 28 tragenden Magnetträger-Bauteile 44a und die keine Bremsfeld-Magnete 28 tragenden Magnetträger-Bauteile 44b sind relativ zueinander beweglich und zwar in der in den Figuren 2 und 3 gezeigten Ausführungsform in einer Richtung parallel zu den Polarisierungsrichtungen der Bremsfeld-Magnete 28.

Wie den Figuren 2 und 3 zu entnehmen ist, sind die Magnetträger-Bauteile 44a und 44b grundsätzlich in unterschiedlichen Gestalten ausführbar, wobei alle in der Ausführungsform der Figuren 2 und 3 gezeigten Gestaltungsformen prismatisch sind, vorzugsweise vierseitig prismatisch.

Bevorzugt sind alle nicht Bremsfeld-Magnete 28 tragenden Magnetträger-Bauteile 44b in der gleichen Gestalt ausgebildet. In den Figuren 2 und 3 sind lediglich in einer einzigen Ausführungsform mehrere mögliche Gestalten dargestellt, was anzeigt, dass es auf die Gestalt der Magnetträger-Bauteile 44a oder/und 44b nicht ankommt, um die Wirkungen der vorliegenden Erfindung zu realisieren.

Die Magnetträger-Bauteile 44a sind zur gemeinsamen Bewegung miteinander verbunden bzw. sind im vorliegenden Beispiel gemeinsam ortsfest und bilden eine Trägerbaugruppe 46.

Ebenso sind die Magnetträger-Bauteile 44b zur gemeinsamen Bewegung miteinander verbunden, beispielsweise über eine sie tragende Supportplatte 48, und bilden eine Steuerbaugruppe 50. Die Steuerbaugruppe 50 kann durch Magnetfluss-Änderungsmittel 52, umfassend einen Aktuator 54 in beispielhafter Gestalt einer doppelt-wirkenden Kolben-Zylinder-Baugruppe und einer Steuervorrichtung 56 zu Ansteuerung der Ventile 58 der doppelt-wirkenden Kolben-Zylinder-Baugruppe 54. Die Kolbenstange 60 der Kolben-Zylinder-Baugruppe 54 kann überdies zur Bewegung geführt sein. Dergleichen Führungsmittel sind dann ebenfalls Teil der Magnetfluss-Änderungsmittel 52.

In Figur 2 liegen die Magnetträger-Bauteile 44a und 44b spaltfrei aneinander an und bilden einen ferromagnetischen luftspaltfreien Magnetträger 26.

In Figur 3 ist die Magnetanordnung 22 von Figur 2 in ihrer Betriebsstellung schwächerer Bremskraft dargestellt. Die Steuerbaugruppe 50 ist von der Trägerbaugruppe 46 längs der Kolbenstange 60 und damit parallel zu den Polarisierungsrichtungen der Bremsfeld-Magnete 28 angehoben. Dadurch werden zwischen Magnetträger-Bauteilen 44a und 44b Luftspalte 62 gebildet bzw. vergrößert, wodurch der magnetische Widerstand des Magnetträgers 22 in einem Änderungsbereich 64 geändert wird, welcher ausgehend von der Induktionsseite 28a der Bremsfeld-Magnete sich in Richtung zum Magnetträger 26 hin erstreckt. Dadurch wird der magnetische Fluss der durch die einzelnen Bremsfeld-Magnete 28 erzeugten Magnetkreise verringert, wodurch die magnetische Flussdichte im Induktionsbereich 34, verglichen mit der Betriebsstellung von Figur 2, verringert wird.

Die sich relativ zur Magnetanordnung 22 mit Abstand von der Induktionsseite 28a vorbei bewegende Induktionsanordnung 24 erfährt somit bei der Betriebsstellung von Figur 3 der Magnetanordnung 22 eine geringere Induktionswirkung, wodurch geringere Wirbelströme im Induktionsteil 30 induziert werden und somit eine schwächere Bremswirkung der Wirbelstrombremse 20 erreicht wird als in der Betriebsstellung der Magnetanordnung 22 von Figur 2.

Die Steuerbaugruppe 50 befindet sich daher in Figur 3 in ihrer Schwächungsstellung und befindet sich in Figur 2 in ihrer Leitungsstellung. In der Schwächungsstellung ist die Steuerbaugruppe 50 weiter vom Tragbereich 38 entfernt als in der Leitungsstellung.

Weiterhin kann die Steuerbaugruppe 50 zur gemeinsamen Bewegung mit Einflussbauteilen 66 verbunden sein, welche dauerhaft magnetisiert sind, und zwar mit längs der Folgeachse F alternierenden Polarisierungsrichtungen, die parallel zur Folgeachse F orientiert sind. Die Einflussbauteile 66 bilden gemeinsam eine Einflussbaugruppe 67. Diese Einflussbauteile 66 sind in der Leitungsstellung der Steuerbaugruppe in Abstandräumen 40 zwischen zwei längs der Folgeachse F unmittelbar aufeinander folgenden Bremsfeld-Magneten 28 angeordnet und sind in der Schwächungsstellung aus diesen Abstandsräumen 40 zurückgezogen. In der Leitungsstellung fördern sie den magnetischen Fluss von Magnetkreisen, die unter Beteiligung der ihnen unmittelbar benachbarten Bremsfeld-Magneten 28 gebildet sind. Damit erhöhen sie die magnetische Flussdichte der von den an sie angrenzenden Bremsfeld-Magneten 28 erzeugten Magnetkreise im Induktionsbereich 34. In der Schwächungsstellung sind diese dauerhaft magnetisierten ferromagnetischen Einflussbauteile 66, welche somit auch Fluss-Beeinflussungsmagnetformationen mit jeweils einem Fluss-Beeinflussungsmagnet sind, aus den Abstandsräumen 40 zurückgezogen, sodass auch dadurch ein magnetischer Widerstand im betroffenen Magnetkreis erhöht ist. Dadurch ist wodurch wiederum der magnetische Fluss in dem betroffenen Magnetkreis der beteiligten Bremsfeld-Magnete 28 verringert, wodurch die magnetische Flussdichte im Induktionsbereich 34 verringert ist.

Es sei angemerkt, dass dann, wenn die Supportplatte 48 aus ferromagnetischem Material gebildet ist, die dauerhaft magnetisierten Einflussbauteile 66 mit längs der Folgeachse F alternierenden Polarisierungsrichtungen ohne zwischenangeordnete Magnetträger-Bauteile 44b unmittelbar an der Supportplatte 48 als Magnetträger angeordnet sein können, da bei Vorhandensein von derartigen dauermagnetisierten Einflussbauteilen 66 die Menge an ferromagnetischem Magnetträgermaterial reduziert sein kann, ohne dass hierdurch der magnetische Fluss von an Einflussbauteilen 66 angrenzenden Bremsfeld-Magneten 28 reduziert ist. Dies liegt daran, dass die Einflussbauteile 66 mit der angegebenen Polarisierung das Magnetfeld der an sie längs der Folgeachse F angrenzenden Bremsfeld-Magnete 28 führen.

Anzumerken ist, dass, obwohl die Figur 3 unterschiedliche Ausgestaltungsformen eines Magnetträgers in ein und demselben Magnetträger 22 zeigt, üblicherweise ein Magnetträger 22 bzw. eine Steuerbaugruppe 50 einheitlich ausgebildet ist, also ihre Magnetträger-Bauteile 44b einheitlich ausgestaltet sind und entweder an allen Abstandsräumen 40 dauerhaft magnetisierte Einflussbauteile 66 vorhanden sind oder an keinem.

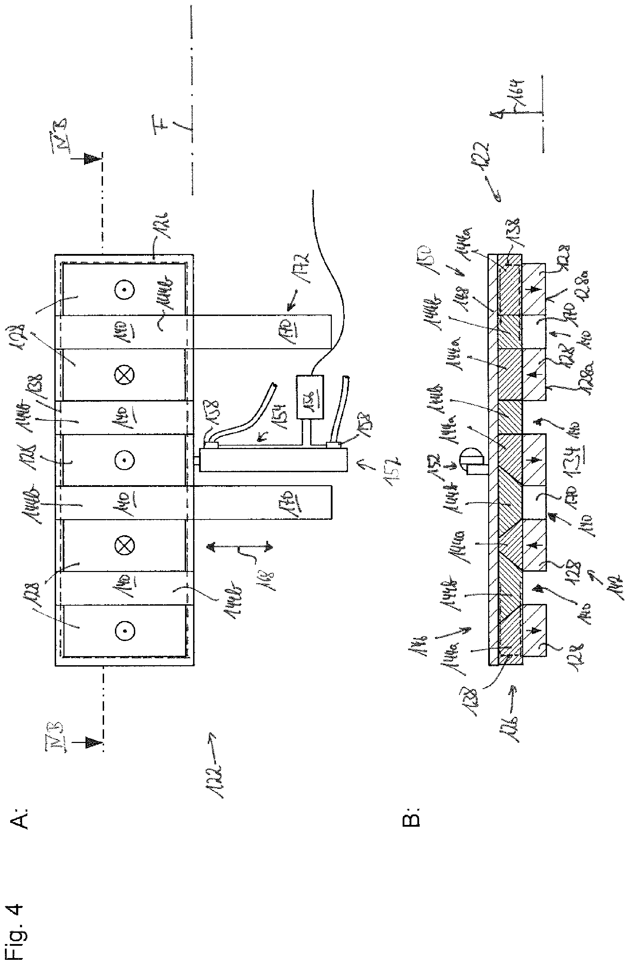

In den Figuren 4A bis 5B ist eine zweite Ausführungsform einer Magnetanordnung mit veränderlicher Bremswirkung gezeigt.

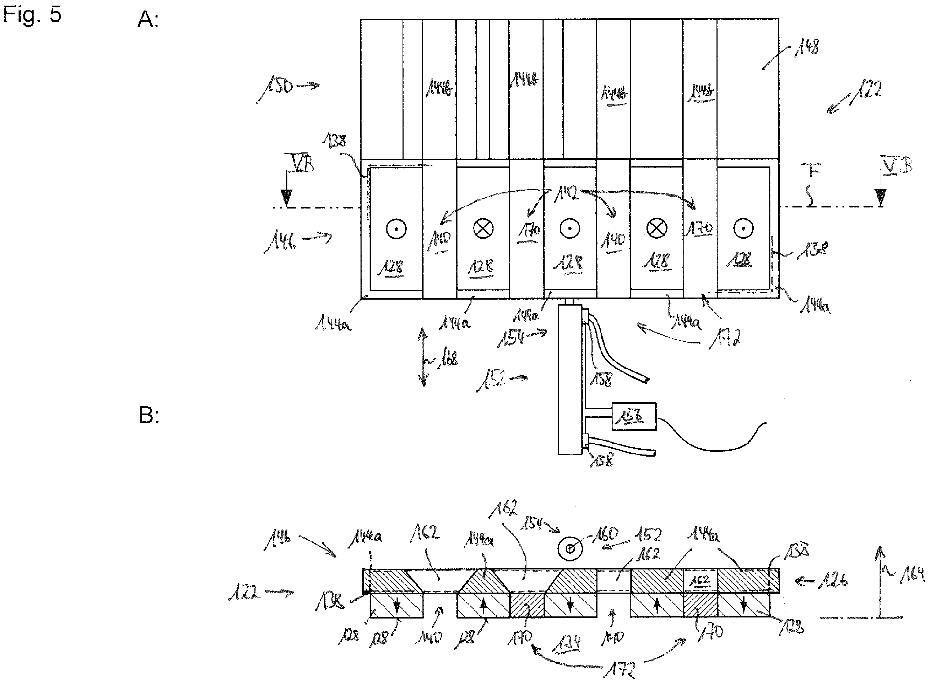

Gleiche und funktionsgleiche Bauteile wie in der ersten Ausführungsform der Figuren 2 und 3 sind in der zweiten Ausführungsform der Figuren 4 und 5 mit gleichen Bezugszeichen versehen, jedoch erhöht um die Zahl 100.

Die zweite Ausführungsform wird nachfolgend nur insofern beschrieben werden, als sie sich von der ersten Ausführungsform unterscheidet, auf deren Beschreibung ansonsten auch zur Beschreibung der zweiten Ausführungsform verwiesen wird.

Die zweite Ausführungsform der Figuren 4 und 5 unterscheidet sich von der ersten Ausführungsform im Wesentlichen durch die Bewegungsrichtung, längs welcher die Steuerbaugruppe 150 relativ zur Trägerbaugruppe 146 beweglich ist.

In Figur 4A ist die Magnetanordnung 122 vom Induktionsbereich 134 aus betrachtet in Unteransicht dargestellt, und zwar in ihrer Betriebsstellung stärkerer Bremswirkung.

Die Steuerbaugruppe 150 ergänzt mit ihren Magnetträger-Bauteilen 144b die Trägerbaugruppe 146 mit deren Magnetträger-Bauteilen 144a zu einem im Wesentlichen luftspaltfreien Magnetträger 126.

Im Gegensatz zur ersten Ausführungsform ist die Steuerbaugruppe 150 relativ zur Trägerbaugruppe 146 nicht längs einer Parallelen zu den Polarisierungsrichtungen der Bremsfeld-Magneten 128 bewegbar, sondern, wie durch den Doppelpfeil 168 angedeutet, längs einer Bewegungsrichtung orthogonal sowohl zur Folgeachse F als auch zu den Polarisierungsrichtungen der Bremsfeld-Magneten 128.

Wiederum kann die Steuerbaugruppe 150 gemäß einer Abwandlung Einflussbauteile 170 aufweisen, die in vorliegendem Beispielfall weichmagnetisch sind, also ferromagnetisch, aber nicht dauerhaft magnetisiert. Die Einflussbauteile 170, die gemeinsam eine Einflussbaugruppe 172 bilden, befinden sich in ihrer in den Figuren 4A und 4B gezeigten ersten Betriebsstellung außerhalb der Abstandsräume 140 bzw. außerhalb des aus der Summe aller Abstandsräume 140 gebildeten Abstandsbereichs 142.

Es sei klargestellt, dass die in den Figuren 4A und 4B lediglich an zwei Abstandsbereichen 140 dargestellten Einflussbauteile 170 dann, wenn sie vorhanden sein sollten, vorteilhafterweise an allen Abstandsräumen 140 vorgesehen sein.

In den Figuren 5A und 5B ist die Steuerbaugruppe 150 in ihrer Schwächungsstellung dargestellt, also entfernt vom Tragbereich 138, welcher in den Figuren 5A und 5B nur noch durch diagonal gegenüberliegende Eckbereiche angedeutet ist, um die Übersichtlichkeit der Figuren 5A und 5B nicht zu beeinträchtigen.

Den magnetischen Widerstand des Tragbereichs 138 der Magnetanordnung 122 erhöhende Luftspalte 162 sind nun in der Schwächungsstellung gemäß den Figuren 5A und 5B zwischen längs der Folgeachse F aufeinander folgenden Magnetträger-Bauteilen 144a gebildet.

Die mit der Steuerbaugruppe 150 zur gemeinsamen Bewegung gekoppelte Einflussbaugruppe 172 befindet sich in den Figuren 5A und 5B aufgrund der Verlagerung der Steuerbaugruppe 150 in ihrer zweiten Betriebsstellung, in welcher sie unmittelbar in den Abstandsbereich 142 zwischen den Bremsfeld-Magneten 128 eingefahren ist. Durch das Einfahren weichmagnetischer Einflussbauteile 170 in Abstandsräume 140 zwischen zwei längs der Folgeachse F unmittelbar aufeinander folgenden Bremsfeld-Magneten 128 werden die längs der Folgeachse F unmittelbar an die Einflussbauteile 170 angrenzenden Bremsfeld-Magnete 128 magnetisch kurzgeschlossen, wodurch die durch die Bremsfeld-Magnete 128 bewirkte magnetische Flussdichte im Induktionsbereich 134 weiter vermindert werden kann. Dies senkt die Bremswirkung der Magnetanordnung 122.

Alternativ zu der Darstellung der Figuren 4A bis 5B kann der Magnetträger 126 einstückig ausgebildet vorliegen, sodass der Magnetträger 126 nicht in eine Steuerbaugruppe 150 und eine Trägerbaugruppe 146 unterteilt ist. Es kann dann nur eine Einflussbaugruppe 172 vorhanden sein, sodass die Bremswirkung der Magnetanordnung 122 alleine durch Einfahren der weichmagnetischen Einflussbauteile 170 in die Abstandsräume 140 bzw. durch Herausziehen aus diesen verändert wird. Die Kombination der die Bremsfeld-Magnete 128 magnetisch kurzschließenden weichmagnetischen Einflussbauteile 170 mit den die ferromagnetische Masse des Magnetträgers 126 verändernden relativ zueinander beweglichen Magnetträger-Bauteilen 144a und 144b ist jedoch zur Veränderung der Bremswirkung effektiver.

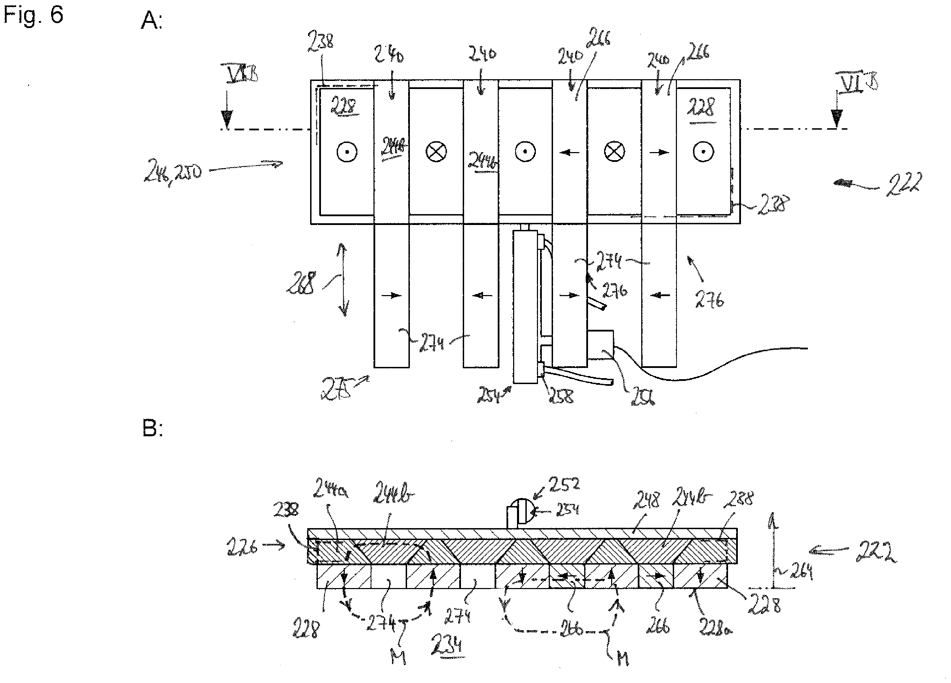

In den Figuren 6A bis 7B ist eine dritte Ausführungsform der vorliegenden Erfindung gezeigt, welche nachfolgend nur insofern beschrieben werden wird, als sie sich von den zuvor beschriebenen Ausführungsformen unterscheidet, auf deren Beschreibung auch zur Beschreibung der dritten Ausführungsform der Figuren 6A bis 7B ausdrücklich verwiesen wird.

Gleiche und funktionsgleiche Bauteile bzw. Bauteilabschnitte wie in den Figuren 2 bis 5B sind in den Figuren 6A bis 7B mit gleichen Bezugszeichen versehen, jedoch erhöht um die Zahl 200 bezüglich der Figuren 2 und 3 bzw. erhöht um die Zahl 100 bezüglich der Figuren 4A bis 5B.

Die Relativbewegung von Steuerbaugruppe 250 zu Trägerbaugruppe 246 ist die gleiche wie in der Ausführungsform der Figuren 4A bis 5B. Die Wirkung der Relativbewegung der Steuerbaugruppe 250 relativ zur Trägerbaugruppe 246 entspricht jener, die zuvor bereits mit der vorhergehenden zweiten Ausführungsform beschrieben wurde.

Wiederum zeigen die Figuren 6A bis 7B unterschiedliche Ausgestaltungsformen in einer einzigen Ausführungsform.

Wie in der ersten Ausführungsform der Figuren 2 und 3 ist in den beiden rechten Abstandsräumen 240 in der Betriebsstellung mit stärkerer Bremswirkung jeweils ein dauermagnetisierter Ferromagnet als Einflussbauteil 266 bzw. als Fluss-Beeinflussungsmagnet 266 angeordnet. Die beiden in den Figuren 6A und 6B linken Abstandsräume 240 der Magnetanordnung 222 sind dagegen in der Betriebsstellung stärkerer Bremswirkung nicht mit Festkörpern gefüllt, sondern mit Umgebungsluft.

In Relativbewegungsrichtung 268 folgen auf die festkörperfreien Abstandsräume 240 bzw. auf die Fluss-Beeinflussungsmagnete 266 Fluss-Beeinflussungsmagnete 274. Diese weiteren Fluss-Beeinflussungsmagnete 274 sind derart magnetisiert, dass sie, wenn sie in die Abstandsräume 240 zwischen jeweils längs der Folgeachse F aufeinander folgenden Bremsfeld-Magneten 228 eingefahren sind, das von den Bremsfeld-Magneten 228 ausgehende Magnetfeld so leiten, dass die magnetische Flussdichte im Induktionsbereich 234 erheblich abnimmt.

Die Fluss-Beeinflussungsmagnete 274 in der linken Hälfte der Magnetanordnung 222 der Figuren 6A bis 7B bilden jeweils eine Beeinflussungsmagnetformation 275. Die miteinander zur gemeinsamen Bewegung gekoppelten Fluss-Beeinflussungsmagnete 266 und 274 bilden jeweils eine Fluss-Beeinflussungsmagnetformation 276. Während also die in den Abstandsräumen 240 angeordneten Fluss-Beeinflussungsmagnete 266 das von den unmittelbar ihnen längs der Folgeachse benachbarten Bremsfeld-Magneten 228 ausgehende Magnetkreise M im Wesentlichen so führen, dass es ausgehend von den Bremsfeld-Magneten 28 in den Induktionsbereich 234 wirkt, leiten die entgegengesetzt polarisierten weiteren Fluss-Beeinflussungsmagnete 274 dann, wenn sie statt der vorgenannten Magnete 266 in die Abstandsräume 240 eingeschoben sind, die von den selben benachbarten Bremsfeld-Magneten 228 gebildeten Magnetkreise M derart, dass sie vom Induktionsbereich 234 weg zum Magnetträger 226 hin verlaufen.

Die Wirkung der einzelnen Fluss-Beeinflussungsmagnetformationen 275, welche keine Fluss-Beeinflussungsmagnete 266 aufweisen, haben in den Abstandsräumen 240 die gleiche Wirkung wie diejenigen Fluss-Beeinflussungsmagnete 274, welche Teil von Fluss-Beeinflussungsmagnetformationen 276 sind. Lediglich in derjenigen Betriebsstellung, in welcher die Fluss-Beeinflussungsmagnete 266 die von den ihnen benachbarten Bremsfeld-Magneten 228 ausgehenden Magnetkreise M zum Induktionsbereich 234 hin führen, tritt ein solcher Effekt bei den dann festkörperfreien Abstandsräumen 240 nicht ein. Die Magnetkreise M verlaufen dann über den ferromagnetischen Magnetträger 226.

Wiederum sei darauf hingewiesen, dass die in den Figuren 6A bis 7B gezeigte Ausführungsform unterschiedliche Ausgestaltungsformen zeigt, um eine übermäßige Anzahl an Patentzeichnungen der vorliegenden Anmeldung zu vermeiden. In der Realität wird eine Magnetanordnung 222 über alle Abstandsräume 240 hinweg gleich ausgebildet sein.

Wiederum gilt, dass abweichend von der Darstellung der Figuren 6A bis 7B die Veränderung der magnetischen Flussdichte im Induktionsbereich 234 bzw. die Veränderung der Bremswirkung der Magnetanordnung 222 nur durch Verlagerung der Fluss-Beeinflussungsmagnetformationen 276 bzw. nur der Fluss-Beeinflussungsmagnetformationen 275 (siehe Figuren 6A bis 7B, linke Hälfte der jeweiligen Magnetanordnung 222) bewirkt werden kann, sodass der Magnetträger 226 auch einstückig ausgebildet sein kann. Die Kombination von verlagerten Fluss-Beeinflussungsmagneten 266 und 274 mit einer Veränderung der ferromagnetischen Masse des Magnetträgers 226 verstärkt jedoch die Unterschiede in der Bremswirkung der jeweiligen Betriebsstellungen der Magnetanordnung 222.

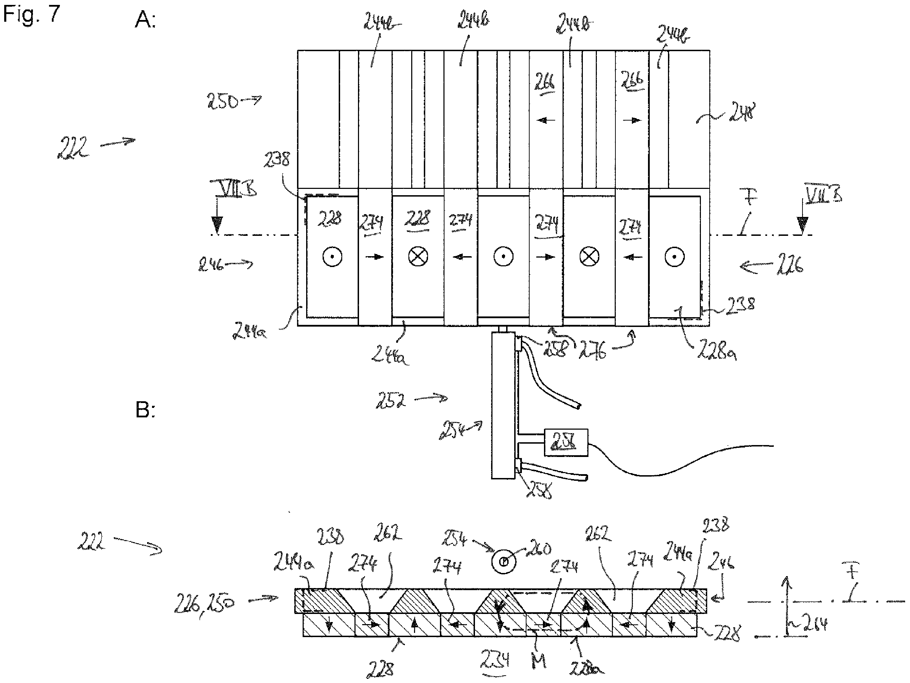

In den Figuren 7A und 7B ist die Magnetanordnung 222 in ihrer Betriebsstellung schwächerer Bremswirkung gezeigt. Die sich dann in den Abstandsräumen 240 befindenden Fluss-Beeinflussungsmagnete 274 bilden die Magnetkreise M ausgehend von den ihnen längs der Folgeachse F benachbarten Bremsfeld-Magneten 228 vom Induktionsbereich 234 weg zum Magnetträger 226 hin. Dadurch ist die magnetische Flussdichte im Induktionsbereich 234 in der Betriebsstellung der Figuren 7A und B schwächer als in der Betriebsstellung der Figuren 6A und B.

Anstelle einer linearen Bewegung, in welcher die Fluss-Beeinflussungsmagnetformation 276 durch den Abstandsraum zwischen zwei benachbarten Bremsfeld-Magneten 228 bewegt wird, kann dies auch auf einer Kreisbahn erfolgen, beispielsweise durch einen geschlossenen Kreis aus aufeinander folgenden Fluss-Beeinflussungsmagneten mit in Umfangsrichtung alternierender Polarisierung, welcher um eine zur Folgeachse F parallele Drehachse drehbar ist.

Weiterhin sind in den Figuren 2 bis 6 jeweils nur Endstellungen der jeweiligen Baugruppen 46, 50, 67; 146, 150, 172 und 246, 250, 275, 276 gezeigt. Zur stufenlosen Veränderung der Bremswirkung der Magnetanordnung können auch Zwischenstellungen in der Relativbewegung zwischen Steuerbaugruppe und Trägerbaugruppe bzw. zwischen Trägerbaugruppe und Einflussbaugruppe erzielt werden.

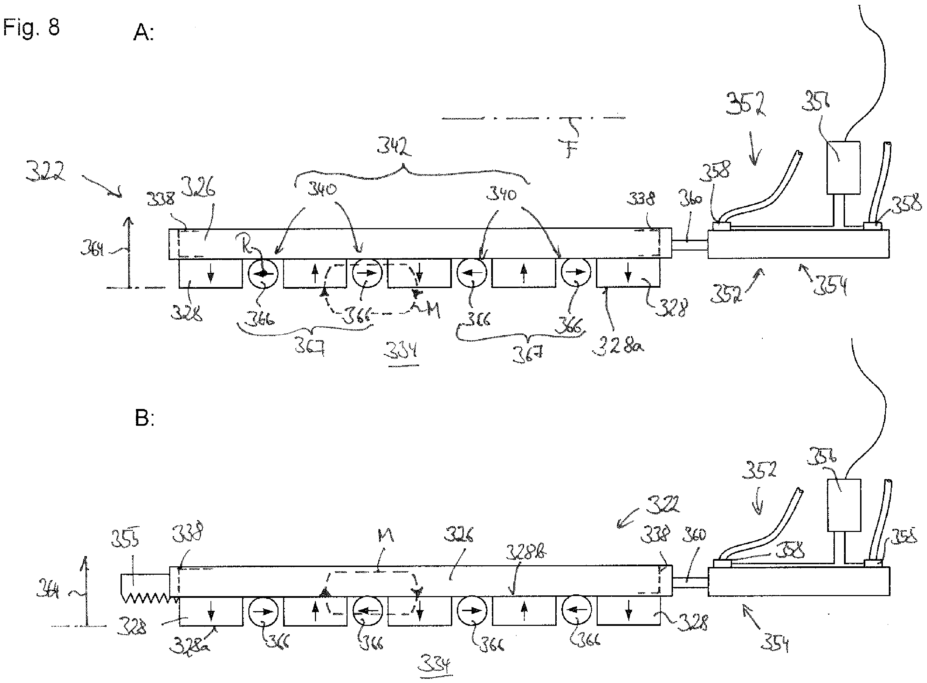

In den Figuren 8A und B sind grobschematische Seitenansichten einer vierten Ausführungsform der Magnetanordnung der vorliegenden Anmeldung dargestellt, und zwar in Figur 8A in der Betriebsstellung stärkerer Bremswirkung und in Figur 8B in der Betriebsstellung schwächerer Bremswirkung.

Gleiche und funktionsgleiche Bauteile bzw. Bauteilabschnitte wie in den vorhergehenden Ausführungsformen sind in der vierten Ausführungsform der Figuren 8A und B mit gleichen Bezugszeichen versehen, jedoch angeführt von der Ziffer 3, also gekennzeichnet durch Bezugszeichen im Wertebereich zwischen 300 und 399.

Die vierte Ausführungsform wird nachfolgend nur insoweit beschrieben werden, als sie sich von den vorhergehenden drei Ausführungsformen unterscheidet, auf deren Beschreibung ansonsten auch zur Erläuterung der vierten Ausführungsform der Figuren 8A und B ausdrücklich verwiesen wird.

Die vierte Ausführungsform der Figuren 8A und B enthält in den Abstandsräumen 340 zwischen längs der Folgeachse F benachbarten Bremsfeld-Magneten 328 Fluss-Beeinflussungsmagnetformationen 367 mit jeweils genau einem Fluss-Beeinflussungsmagnet 366, welche um eine zur Folgeachse F und zu den Polarisierungsrichtungen der Bremsfeld-Magnete 228 orthogonale Rotationsachse R drehbar gelagert sind. Durch eine nur in Figur 8B gezeigte Zahnstange 355, welche mit der Kolbenstange 360 der Kolben-Zylinder-Anordnung 354 gekoppelt ist, können die Drehstellungen der Fluss-Beeinflussungsmagnete 366 zwischen der in Figur 8A gezeigten Betriebsstellung maximaler Bremswirkung und der in Figur 8B gezeigten Betriebsstellung minimaler Bremswirkung verdreht werden. Es sind auch Zwischenstellungen zwischen den in den Figuren 8A und B gezeigten Betriebsstellungen denkbar, um eine zwischen der maximalen und der minimalen Bremswirkung liegende Bremswirkung zu erzielen.

Die Zahnstange 355 kann mit jeweiligen (hinter dem Magnetträger 322 liegenden) Zahnrädern kämmen, welche drehfest koaxial mit den Fluss-Beeinflussungsmagneten 366 gekoppelt sind.

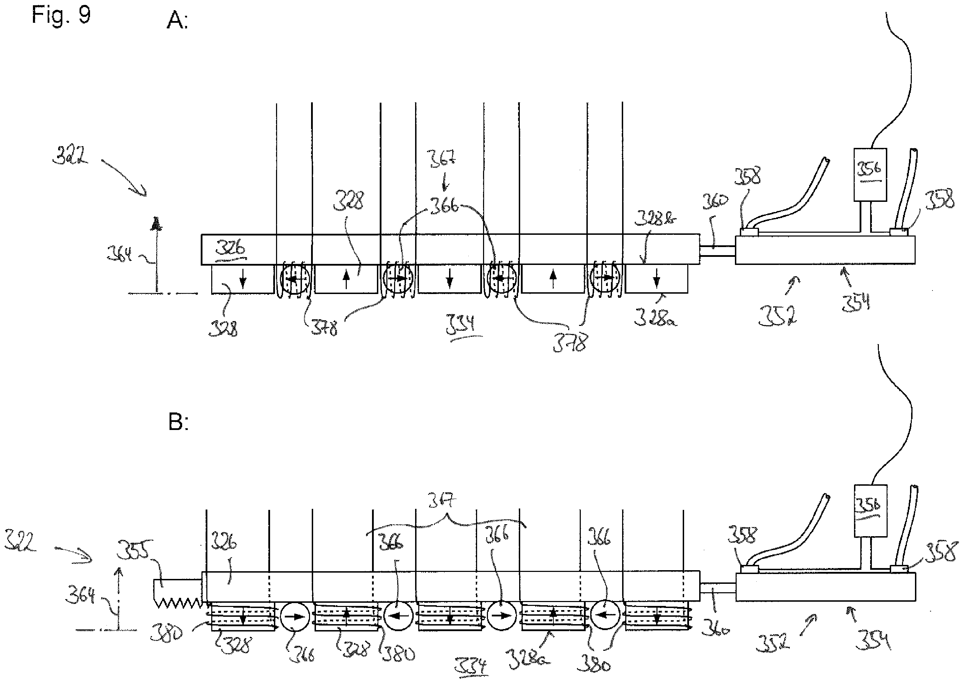

In Figur 9A ist die vierte Ausführungsform der Figuren 8A und 8B mit einer Modifikation dargestellt. Die Fluss-Beeinflussungsmagneten 366 sind jeweils von elektrisch leitenden Spulen 378 umgeben, sodass durch Bestromung der Spulen 378 aufgrund des dadurch im Inneren der Spule entstehenden Magnetfelds die zur Verstellung der Fluss-Beeinflussungsmagnete 366 zwischen ihren beiden in den Figuren 8A und B gezeigten Extrem-Betriebsstellungen benötigte Kraft bzw. das hierzu benötigte Drehmoment verringert werden kann. Die Spulen 378 reichen nicht in den Induktionsbereich 334 hinein.

In Figur 9B ist eine alternative Modifikation gezeigt. Dort sind die Bremsfeld-Magneten 328 von Spulen 380 umgeben. Wiederum kann durch Bestromung der Spulen 380 das von den Bremsfeld-Magneten 328 ausgehende Magnetfeld abgeschwächt werden, sodass wiederum die zur Verstellung der Fluss-Beeinflussungsmagneten 366 benötigte Kraft verringert werden kann. Dementsprechend kann eine kleiner dimensionierte Kolben-Zylinder-Anordnung 354 zur Verstellung der Fluss-Beeinflussungsmagnete 366 verwendet werden. Die Spulen 380 reichen nicht in den Induktionsbereich 334 hinein.

Die Bestromung der Spulen 378 oder/und 380 kann durch die Steuervorrichtung 356 erfolgen, welche auch den Betrieb der doppelt-wirkenden Kolben-Zylinder-Anordnung 354 steuert.

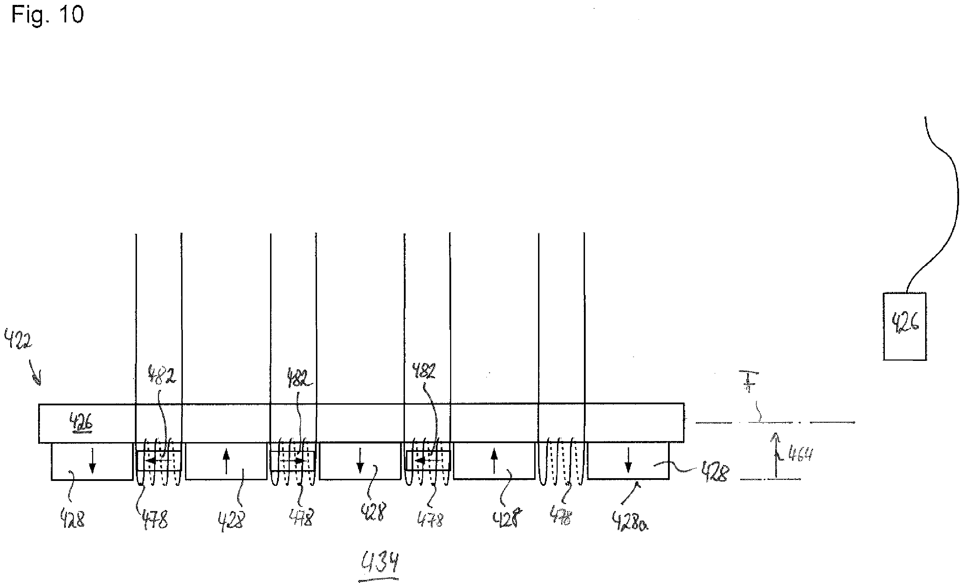

In Figur 10 ist eine fünfte Ausführungsform der vorliegenden Erfindung grobschematisch in Seitenansicht dargestellt. Gleiche und funktionsgleiche Bauteile bzw. Bauteilabschnitte wie in den vorhergehenden Ausführungsformen sind in Figur 10 mit gleichen Bezugszeichen versehen, jedoch angeführt durch die Ziffer 4, also in einem Bezugszeichen-Wertebereich von 400 bis 499.

Die fünfte Ausführungsform der vorliegenden Erfindung wird nachfolgend nur insofern erläutert werden, als sie sich von den vorhergehenden Ausführungsformen unterscheidet, auf deren Beschreibung ansonsten auch zur Erläuterung der fünften Ausführungsform verwiesen wird.

Die fünfte Ausführungsform weist die aus der Modifikation der vierten Ausführungsform gemäß Figur 9A bekannten Spulen 378 im Abstandsbereich 442 der Magnetanordnung 422 auf. Abweichend von der zeichnerischen Darstellung reichen die Spulen 478 nicht in den Induktionsbereich 434 hinein.

Bei der fünften Ausführungsform der Figur 10 werden keine Bauteile relativ zueinander verlagert. Die Spulen 478 können durch die Steuereinrichtung 426 in entgegengesetzte Richtungen bestromt werden, sodass je nach dem sich in den Spulen 480 ausbildenden Magnetfeld, welches aufgrund der Wicklungsrichtung mit zur Folgeachse F paralleler Wicklungsachse stets parallel zur Folgeachse F polarisiert ist, die Spulen-Magnetfelder die gleiche Wirkung haben, wie die Magnetfelder der Fluss-Beeinflussungsmagnete 266 und 274 der Figuren 6 und 7 oder wie die Magnetfelder der Fluss-Beeinflussungsmagneten 366 in ihren in den Figuren 8A und 8b gezeigten Endstellungen. Die Spulen-Magnetfelder können also die von den unmittelbar einer Spule 478 benachbarten Bremsfeld-Magneten 428 ausgehenden Magnetkreise in einer Spulen-Polarisationsrichtung in den Induktionsbereich 434 hinein richten und können die Magnetkreise bei entgegengesetzter Spulen-Polarisierung zum Magnetträger 426 hin richten. Im letztgenannten Fall ist die magnetische Flussdichte im Induktionsbereich 434 schwächer ist als im erstgenannten Fall. Die Spulen-Polarisierungsrichtung kann durch Änderung der Bestromungs-Polarisierung der Spulen geändert werden.

Wie in Figur 10 dargestellt ist, können sich im Inneren der Spulen 478 weichmagnetische Anker 482 befinden, welche das von den Spulen 478 gebildete Magnetfeld besonders gut leiten. Wie die in Figur 10 ganz linke Spule 478 zeigt, kann jedoch ein derartiger Anker 482 auch weggelassen sein.

Die Spulen 478, wie bereits zuvor die Spulen 378 und 380, können in längs der Folgeachse aufeinander folgenden Abstandsräumen 440 mit alternierenden Wicklungssinnen gewickelt sein, dann können die Spulen 378 bzw. 478 in Reihe geschalten sein.

Alternativ können stets gleichsinnig gewickelte Spulen 378 bzw. 478 verwendet werden. Dann können alle zweiten längs der Folgeachse F aufeinander folgenden Spulen miteinander in Reihe geschaltet sein, wobei unmittelbar aufeinander folgende Spulen mit entgegengesetzter elektrischer Polarität bestromt werden.

Für die zuvor gezeigten Spulen 380 gilt aufgrund der alternierenden Polarität der von ihnen umgebenen Bremsfeld-Magneten 328 das Entsprechende.

In einer weiteren Modifizierung kann daran gedacht sein, dauerhaft magnetisierte ferromagnetische Anker 482 in den Spulen 478 zu verwenden und diese durch Bestromung der Spulen 478 je nach Bedarf umzumagnetisieren. Dies könnte jedoch aufgrund der hierfür zu überwindenden Hysterese weichmagnetischer Metalle, insbesondere Eisen, zu einem erheblichen Energieaufwand führen.

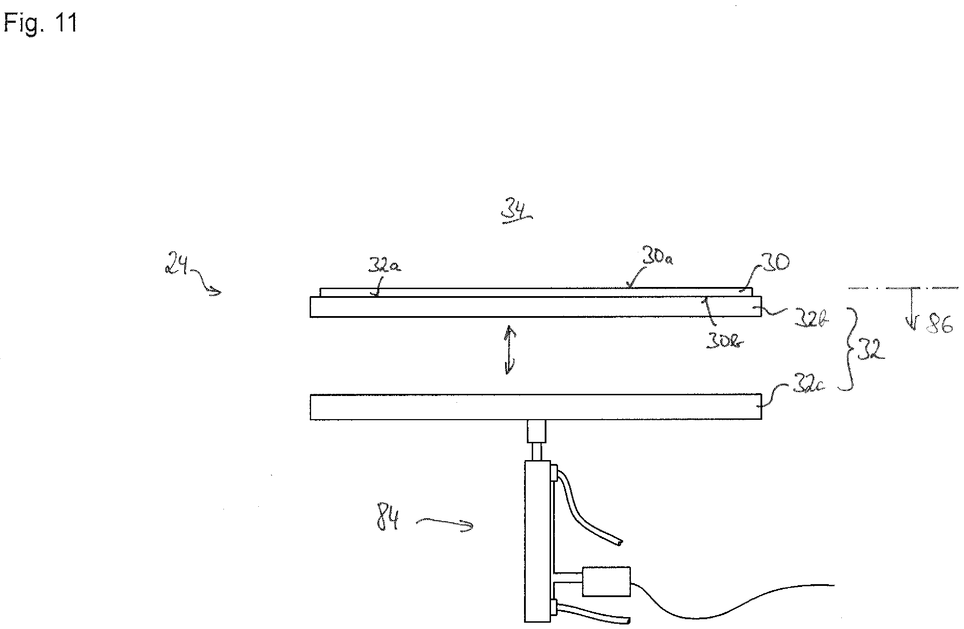

In Figur 11 ist schließlich eine Ausführungsform der Induktionsanordnung 24 dargestellt, die eine veränderliche Bremswirkung hat, weil ihr Rückschlussbauteil 32 aus ferromagnetischem Material mehrteilig ausgebildet ist. Dabei ist ein fest mit dem Induktionsteil 30 verbundenes und daher bei Anordnung der Induktionsteils 30 in einem äußeren Magnetfeld stets Magnetfeld führendes Rückschluss-Teilbauteil 32b ortsfest, und ein weiteres Rückschluss-Teilbauteil 32c ist relativ zu diesem in einer Richtung orthogonal zur Wirkungsseite 30a vom ersten Rückschluss-Teilbauteil 32b entfernbar oder diesem annäherbar. Durch Annäherung des Rückschluss-Teilbauteils 32c kann die magnetisch wirksame ferromagnetische Masse des Rückschlussbauteils 32 erhöht oder verringert werden.

Das erste Rückschluss-Teilbauteil 32b entspricht im Wesentlichen der Trägerbaugruppe 46 des Magnetträgers 26 der ersten Ausführungsform. Das zweite Rückschluss-Teilbauteil 32c entspricht der vorgenannten Trägerbaugruppe 50 des Magnetträgers 26 der ersten Ausführungsform. Aus Gründen erhöhter Effektivität ist bevorzugt die ferromagnetische Masse des Rückschlussbauteils 32 in jenem Bereich veränderbar, der durch das Induktionsteil 30 bedeckt ist.

Die Masseaufteilung des gesamten Rückschlussbauteils 32 zwischen den Teilbauteilen 32b und 32c ist derart, dass das Teilbauteil 32b dann, wenn es in das Magnetfeld einer mit ihr zur Bildung einer Wirbelstrombremse zusammenwirkenden Magnetanordnung gelangt, sicher in magnetischer Sättigung ist. Dann, wenn die Teilbauteile 32b und 32c jedoch zu einem Rückschlussbauteil 32 vereinigt sind, reicht die ferromagnetische Masse des so gebildeten Rückschlussbauteils 32 aus, um unter Einwirkung des von der kooperierenden Magnetanordnung ausgehenden Magnetfelds gerade nicht in magnetischer Sättigung zu sein.

Wie eingangs ausgeführt wurde, spielt es keine Rolle, an welcher Stelle eines Magnetkreises die Magnetfluss-Bedingung verändert wird, um den magnetischen Fluss im gesamten Magnetkreis zu verändern. Daher können durch Verringerung der wirksamen, also Magnetfeld führenden ferromagnetischen Masse des Rückschlussbauteils 32 von einer kooperierenden Magnetfeldanordnung ausgehende Magnetkreise in ihrem magnetischen Fluss verändert werden, sofern sich das Rückschlussbauteil 32 in dem Magnetfeld der kooperierenden Magnetanordnung befindet. Somit kann auch durch die in Figur 11 gezeigte Verringerung der wirksamen ferromagnetischen Masse des Rückschlussbauteils 32 eine im Induktionsbereich 34 wirksame magnetische Flussdichte eines Magnetfelds einer kooperierenden Magnetanordnung verändert werden.

Hierzu weist die Induktionsanordnung Induktionswirkungs-Änderungsmittel 84 auf, welche die exakt gleichen Bauteile umfasst wie die zuvor genannte beispielhafte Magnetfluss-Änderungsmittel 52 der ersten Ausführungsform. Die Änderung der Magnetfeld führenden ferromagnetischen Masse des Rückschlussbauteils erfolgt nur in einem Änderungsbereich 86, welcher von der Wirkungsseite 30a ausgehend hin zum Rückschlussbauteil reicht und welcher bevorzugt von der Lagerungsseite 32a ausgehend vom Induktionsteil 30 weg verläuft.

## Patentansprüche

1. Wirbelstrombremsen-Magnetanordnung (22; 122; 222; 322; 422), umfassend einen wenigstens teilweise ferromagnetischen Magnetträger (26; 126; 226; 326; 426), welcher längs einer Folgeachse (F) eine Mehrzahl von hintereinander angeordneten Bremsfeld-Magneten (28; 128; 228; 328; 428) mit alternierenden, zur Folgeachse (F) jeweils orthogonalen und zueinander parallelen Polarisierungsrichtungen trägt, wobei sich der Magnetträger (26; 126; 226; 326; 426) von einer den Bremsfeld-Magneten (28; 128; 228; 328; 428) nähergelegenen Magnetseite (26a; 126a; 226a; 326a; 426a) ausgehend in Richtung von den Bremsfeld-Magneten (28; 128; 228; 328; 428) weg erstreckt und wobei sich die Bremsfeld-Magneten (28; 128; 228; 328; 428) jeweils zwischen einer dem Magnetträger (26; 126; 226; 326; 426) näher gelegenen Trägerseite (28b; 128b; 228b; 328b; 428b) und einer vom Magnetträger (26; 126; 226; 326; 426) weiter entfernt gelegenen Induktionsseite (28a; 128a; 228a; 328a; 428a) erstrecken, wobei die Induktionsseite (28a; 128a; 228a; 328a; 428a) einem Induktionsbereich (34; 134; 234; 334; 434) zugewandt ist, in welchen hinein das von der Induktionsseite (28a; 128a; 228a; 328a; 428a) ausgehende Magnetfeld der Bremsfeld-Magneten (28; 128; 228; 328; 428) wirkt,
**dadurch gekennzeichnet, dass** die Wirbelstrombremsen-Magnetanordnung (22; 122; 222; 322; 422) zur Veränderung ihrer Bremswirkung Magnetfluss-Änderungsmittel (52; 152; 252; 352; 452) umfasst, welche dazu ausgebildet sind, in einem von der Induktionsseite (28a; 128a; 228a; 328a; 428a) ausgehenden und sich in Richtung zum Magnetträger (26; 126; 226; 326; 426) hin erstreckenden Bereich (64; 164; 264; 364; 464) der Wirbelstrombremsen-Magnetanordnung (22; 122; 222; 322; 422) wenigstens eine Magnetfluss-Bedingung zu verändern, um dadurch die magnetische Flussdichte des von den Bremsfeld-Magneten (28; 128; 228; 328; 428) ausgehenden Magnetfelds im Induktionsbereich (34; 134; 234; 334; 434) zu verändern.

2. Wirbelstrombremsen-Magnetanordnung (22; 122; 222) mit veränderlicher Bremswirkung nach Anspruch 1,
**dadurch gekennzeichnet, dass** der Magnetträger (26; 126; 226) die Bremsfeld-Magneten (28; 128; 228) in einem Tragbereich (38; 138; 238) trägt, wobei die Magnetfluss-Änderungsmittel (52; 152; 252) dazu ausgebildet sind, als die wenigstens eine Magnetfluss-Bedingung die Masse an ferromagnetischem Material im Tragbereich (38; 138; 238) zu verändern.

3. Wirbelstrombremsen-Magnetanordnung (22; 122; 222) mit veränderlicher Bremswirkung nach Anspruch 2,
**dadurch gekennzeichnet, dass** der Magnetträger (26; 126; 226) eine Trägerbaugruppe (46; 146; 246), und eine relativ zur Trägerbaugruppe (46; 146; 246) bewegliche Steuerbaugruppe (50; 150; 250) aufweist, welche Baugruppen (46, 50; 146, 150; 246; 250) jeweils ferromagnetisches Material umfassen, wobei die Magnetfluss-Änderungsmittel (52; 152; 252) dazu ausgebildet sind, die Steuerbaugruppe (50; 150; 250) zwischen einer weiter vom Tragbereich (38; 138; 238) entfernt gelegenen Schwächungsstellung und einer näher am Tragbereich (38; 138; 238) gelegenen Leitungsstellung zu verlagern.

4. Wirbelstrombremsen-Magnetanordnung (22; 122; 222) mit veränderlicher Bremswirkung nach Anspruch 3,
**dadurch gekennzeichnet, dass** wenigstens ein Abschnitt (44a; 144a; 244a), vorzugsweise eine Mehrzahl von Abschnitten, der Trägerbaugruppe (46; 146; 246) dann, wenn sich die Steuerbaugruppe (50; 150; 250) in der Schwächungsstellung befindet, sich derart in magnetischer Sättigung befindet, dass aufgrund des lokal geringen ferromagnetischen Querschnitts des wenigstens einen gesättigten Abschnitts der in diesem Querschnitt mögliche magnetische Fluss auf einen verglichen mit der Leitungsstellung stark herabgesetzten Wert begrenzt ist, und dann, wenn sich die Steuerbaugruppe (50; 150; 250) in der Leitungsstellung befindet, gerade noch nicht in magnetischer Sättigung ist, oder/und dass der Magnetträger (26; 126; 226) wenigstens dann, wenn sich die Steuerbaugruppe (50; 150; 250) in der Schwächungsstellung befindet, wenigstens einen Luftspalt (62; 162; 262), vorzugsweise eine Mehrzahl von Luftspalte (62; 162; 262), aufweist, wobei das gesamte Luftspaltvolumen des Magnetträgers (26; 126; 226) dann, wenn sich die Steuerbaugruppe (50; 150; 250) in der Schwächungsstellung befindet, größer ist als dann, wenn sich die Steuerbaugruppe (50; 150; 250) in der Leitungsstellung befindet.

5. Wirbelstrombremsen-Magnetanordnung (22; 122; 222; 322; 422) mit veränderlicher Bremswirkung nach einem der vorhergehenden Ansprüche,
**dadurch gekennzeichnet, dass** die Bremsfeld-Magneten (28; 128; 228; 328; 428) längs der Folgeachse (F) unter Bildung eines Abstandsbereichs (42; 142; 242; 342; 442) mit Abstand voneinander angeordnet sind, welcher Abstandsbereich (42; 142; 242; 342; 442) sich längs der Folgeachse (F) zwischen den Bremsfeld-Magneten (28; 128; 228; 328; 428), sich parallel zu den Polarisierungsrichtungen der Bremsfeld-Magneten (28; 128; 228; 328; 428) zwischen Trägerseite (28b; 128b; 228b; 328b; 428b) und Induktionsseite (28a; 128a; 228a; 328a; 328a) und sich orthogonal sowohl zur Folgeachse (F) als auch zu den Polarisierungsrichtungen der Bremsfeld-Magneten (28; 128; 228; 328; 428) gemeinsam mit den Bremsfeld-Magneten (28; 128; 228; 328; 428) erstreckt, wobei die Magnetfluss-Änderungsmittel (52; 152; 252; 352; 452) dazu ausgebildet sind, als die wenigstens eine Magnetfluss-Bedingung die Masse an ferromagnetischem Material (66; 170; 274) oder/und die Orientierung von ferromagnetischem Material (276; 366) oder/und die Orientierung einer zusätzlichen Magnetfeldquelle (66; 266, 274; 366, 378; 478) im Abstandsbereich zu verändern.

6. Wirbelstrombremsen-Magnetanordnung (22; 122; 222) mit veränderlicher Bremswirkung nach Anspruch 5,
**dadurch gekennzeichnet, dass** sie eine relativ zu den Bremsfeld-Magneten (28; 128; 228) bewegliche Einflussbaugruppe (67; 172; 275) mit einer Mehrzahl von wenigstens abschnittsweise ferromagnetischen Einflussbauteilen (66; 170; 274) aufweist, wobei die Magnetfluss-Änderungsmittel (52; 152; 252) dazu ausgebildet sind, die Einflussbaugruppe relativ zu den Bremsfeld-Magneten (28; 128; 228) zwischen einer stärker aus dem Abstandsbereich (42; 142; 242) zurückgezogenen ersten Betriebsstellung und einer stärker in den Abstandsbereich (42; 142; 242) eingefahrenen zweiten Betriebsstellung zu verstellen.

7. Wirbelstrombremsen-Magnetanordnung (22; 122; 222) mit veränderlicher Bremswirkung nach Anspruch 6, unter Einbeziehung des Anspruchs 3,
**dadurch gekennzeichnet, dass** die Einflussbaugruppe (67; 172; 275) und die Steuerbaugruppe (50; 150; 250) derart zur gemeinsamen Bewegung gekoppelt sind, dass mit einer Verlagerung der Steuerbaugruppe (50; 150; 250) zwischen ihrer Schwächungsstellung und ihrer Leitungsstellung eine Verstellung der Einflussbaugruppe (67; 172; 275) zwischen ihrer ersten Betriebsstellung und ihrer zweiten Betriebsstellung erfolgt.

8. Wirbelstrombremsen-Magnetanordnung (122) mit veränderlicher Bremswirkung nach einem der Ansprüche 6 oder 7,
**dadurch gekennzeichnet, dass** wenigstens ein Einflussbauteil (170) weichmagnetisches Material umfasst oder/und dass wenigstens ein Einflussbauteil (66; 274) dauermagnetisiertes ferromagnetisches Material mit zur Folgeachse (F) paralleler Polarisierungsrichtung umfasst.

9. Wirbelstrombremsen-Magnetanordnung (222) mit veränderlicher Bremswirkung nach einem der Ansprüche 6 bis 8,
**dadurch gekennzeichnet, dass** sie in längs der Folgeachse (F) aufeinander folgenden Abstandsräumen (240; 340) zwischen längs der Folgeachse (F) aufeinander folgenden Bremsfeld-Magneten (228; 328) je wenigstens eine Fluss-Beeinflussungsmagnetformation (276; 367) aufweist, wobei die Magnetfluss-Änderungsmittel (252; 352) dazu ausgebildet sind, als die wenigstens eine Magnetfluss-Bedingung die Orientierung der von den Fluss-Beeinflussungsmagnetformationen (276; 367) ausgehenden Magnetfelder relativ zu den Bremsfeld-Magneten (228; 328) zu verändern.

10. Wirbelstrombremsen-Magnetanordnung (222) mit veränderlicher Bremswirkung nach Anspruch 9,
**dadurch gekennzeichnet, dass** die Fluss-Beeinflussungsmagnetformationen (276) längs einer Bewegungsbahn (268) relativ zu den Bremsfeld-Magneten (228) beweglich sind, wobei jede Fluss-Beeinflussungsmagnetformation (276) wenigstens zwei längs der Bewegungsbahn (268) aufeinanderfolgende Fluss-Beeinflussungsmagnete (266, 274) unterschiedlicher Polarisationsrichtungen aufweist, wobei die Magnetfluss-Änderungsmittel (252) dazu ausgebildet sind, die Fluss-Beeinflussungsmagnetformationen (276) längs der Bewegungsbahn (268) derart zu bewegen, dass mit der Bewegung eines jeweiligen ersten Fluss-Beeinflussungsmagneten (266) aus seinem Abstandsraum (240) heraus ein jeweiliger zweiter Fluss-Beeinflussungsmagnet (274) der Fluss-Beeinflussungsmagnetformationen (276) mit von jener des ersten Fluss-Beeinflussungsmagneten (266) abweichender Polarisierungsrichtung in den Abstandsraum (240) hineinbewegt wird.

11. Wirbelstrombremsen-Magnetanordnung (322) mit veränderlicher Bremswirkung nach Anspruch 9,
**dadurch gekennzeichnet, dass** die Fluss-Beeinflussungsmagnetformationen (367) um einer Rotationsachse (R) relativ zu den Bremsfeld-Magneten (328) rotierbar sind, wobei die Magnetfluss-Änderungsmittel (352) dazu ausgebildet sind, die Fluss-Beeinflussungsmagnetformationen (367) um ihre jeweilige Rotationsachse (R) zu rotieren, um dadurch als die wenigstens eine Magnetfluss-Bedingung die Orientierung des von ihnen ausgehenden Magnetfelds relativ zu den Bremsfeld-Magneten (328) zu ändern.

12. Wirbelstrombremsen-Magnetanordnung (222; 322) mit veränderlicher Bremswirkung nach Anspruch 10 oder 11,
**dadurch gekennzeichnet, dass** längs der Folgeachse (F) aufeinander folgende Fluss-Beeinflussungsmagnetformationen (275, 276; 367) mit alternierenden Polarisierungsrichtungen angeordnet sind.

13. Wirbelstrombremsen-Magnetanordnung (322; 422) mit veränderlicher Bremswirkung nach einem der Ansprüche 6 bis 12,
**dadurch gekennzeichnet, dass** sie an den Bremsfeld-Magneten (328; 428) oder/und in längs der Folgeachse (F) aufeinander folgenden Abstandsräumen (340; 440) zwischen längs der Folgeachse (F) aufeinander folgenden Bremsfeld-Magneten (328; 428) je wenigstens einen Magnetfluss-beeinflussenden Elektromagneten (378, 380; 478) aufweist, wobei die Magnetfluss-Änderungsmittel (352; 452) dazu ausgebildet sind, die Bestromung der Elektromagneten (378, 380; 478) hinsichtlich Betrag oder/und Polarität zu verändern.

14. Wirbelstrombremsen-Induktionsanordnung (24), umfassend ein flächiges, elektrisch leitendes Induktionsteil (30) mit zwei zueinander in Dickenrichtung des Induktionsteils (30) mit Abstand voneinander gelegenen Hauptseiten (30a, 30b) sowie ein das Induktionsteil (30) tragendes ferromagnetisches Rückschlussbauteil (32), wobei das Induktionsteil (30) mit seiner einen Hauptseite (30b) als einer Montageseite (30b) dem Rückschlussbauteil (32) zugewandt ist und mit seiner anderen Hauptseite (30a) als einer Wirkungsseite (30a) einem Induktionsbereich (34) zugewandt ist, in welchen hinein ein von einer mit dem Induktionsteil (30) induktiv zusammenwirkenden Wirbelstrombremsen-Magnetanordnung (22) ausgehendes Magnetfeld wirkt,
**dadurch gekennzeichnet, dass** die Wirbelstrombremsen-Induktionsanordnung (24) zur Veränderung ihrer Bremswirkung Induktionswirkungs-Änderungsmittel (84) umfasst, welche dazu ausgebildet sind, in einem sich ausgehend von der Wirkungsseite (30a) in Richtung zum Rückschlussbauteil (32) erstreckenden Bereich (86) der Wirbelstrombremsen-Induktionsanordnung (22) wenigstens eine Magnetfluss-Bedingung zu verändern, insbesondere die Magnetfeld führende ferromagnetische Masse (32b) des Rückschlussbauteils (32) zu verändern, um dadurch die magnetische Flussdichte eines Magnetfelds im Induktionsbereich (34) zu verändern und so die bei vorgegebener Wirbelstrombremsen-Magnetanordnung (22) und vorgegebenen Betriebsbedingungen mit der Wirbelstrombremsen-Induktionsanordnung (24) erzielbare Induktionswirkung zu verändern.

15. Wirbelstrombremse (20) mit einstellbarer Bremswirkung, umfassend wenigstens eine Magnetanordnung (22) und wenigstens eine mit dieser induktiv zusammenwirkende Induktionsanordnung (24), wobei die wenigstens eine Magnetanordnung (22) und die wenigstens eine Induktionsanordnung (24) relativ zueinander längs eines Relativbewegungspfads (B) beweglich sind,
**dadurch gekennzeichnet, dass** die Magnetanordnung (22) eine Wirbelstrombremsen-Magnetanordnung (22) gemäß einem der Ansprüche 1 bis 13 ist oder/und dadurch, dass die Induktionsanordnung (24) eine Wirbelstrombremsen-Induktionsanordnung (24) nach Anspruch 14 ist.

## Claims

1. An eddy current brake magnet arrangement (22; 122; 222; 322; 422), encompassing an at least partly ferromagnetic magnet carrier (26; 126; 226; 326; 426) that carries, along a succession axis (F), a plurality of braking-field magnets (28; 128; 228; 328; 428) which are arranged one behind another and have alternating polarization directions that are each orthogonal to the succession axis (F) and parallel to one another; the magnet carrier (26; 126; 226; 326; 426) extending, from a magnet side (26a; 126a; 226a; 326a; 426a) located closer to the braking-field magnets (28; 128; 228; 328; 428), in a direction away from the braking-field magnets (28; 128; 228; 328; 428); and the braking-field magnets (28; 128; 228; 328; 428) each extending between a carrier side (28b; 128b; 228b; 328b; 428b) located closer to the magnet carrier (26; 126; 226; 326; 426) and an induction side (28a; 128a; 228a; 328a; 428a) located farther from the magnet carrier (26; 126; 226; 326; 426); the induction side (28a; 128a; 228a; 328a; 428a) facing toward an induction region (34; 134; 234; 334; 434) into which the magnetic field of the braking-field magnets (28; 128; 228; 328; 428), which proceeds from the induction side (28a; 128a; 228a; 328a; 428a), acts,
**characterized in that** the eddy current brake magnet arrangement (22; 122; 222; 322; 422) encompasses, in order to modify its braking effect, magnetic flux-changing means (52; 152; 252; 352; 452) that are embodied to modify at least one magnetic flux condition in a region (64; 164; 264; 364; 464) of the eddy current brake magnet arrangement (22; 122; 222; 322; 422) which proceeds from the induction side (28a; 128a; 228a; 328a; 428a) and extends toward the magnet carrier (26; 126; 226; 326; 426), in order thereby to modify the magnetic flux density of the magnetic field, proceeding from the braking-field magnets (28; 128; 228; 328; 428), in the induction region (34; 134; 234; 334; 434).

2. The eddy current brake magnet arrangement (22; 122; 222) having a modifiable braking effect according to Claim 1,
**characterized in that** the magnet carrier (26; 126; 226) carries the braking-field magnets (28; 128; 228) in a carrying region (38; 138; 238), the magnetic flux-changing means (52; 152; 252) being embodied to modify, as the at least one magnetic flux condition, the mass of ferromagnetic material in the carrying region (38; 138; 238).

3. The eddy current brake magnet arrangement (22; 122; 222) having a modifiable braking effect according to Claim 2,
**characterized in that** the magnet carrier (26; 126; 226) comprises a carrier subassembly (46; 146; 246) and a control subassembly (50; 150; 250) movable relative to the carrier subassembly (46; 146; 246), which subassemblies (46, 50; 146, 150; 246, 250) each encompass ferromagnetic material; the magnetic flux-changing means (52; 152; 252) being embodied to displace the control subassembly (50; 150; 250) between an attenuation position located remotely from the carrying region (38; 138; 238) and a conduction position located closer to the carrying region (38; 138; 238).

4. The eddy current brake magnet arrangement (22; 122; 222) having a modifiable braking effect according to Claim 3,
**characterized in that** when the control subassembly (50; 150; 250) is in the attenuation position, at least one portion (44a; 144a; 244a), preferably a plurality of portions, of the carrier subassembly (46; 146; 246) is magnetically saturated in such a way that because of the locally small ferromagnetic cross section of the at least one saturated portion, the magnetic flux possible **in that** portion is limited to a greatly reduced value compared with the conduction position, and when the control subassembly (50; 150; 250) is in the conduction position it is just short of magnetic saturation; and/or at least when the control subassembly (50; 150; 250) is in the attenuation position, the magnet carrier (26; 126; 226) comprises at least one air gap (62; 162; 262), preferably a plurality of air gaps (62; 162; 262), the total air gap volume of the magnet carrier (26; 126; 226) being greater when the control subassembly (50; 150; 250) is in the attenuation position than when the control subassembly (50; 150; 250) is in the conduction position.

5. The eddy current brake magnet arrangement (22; 122; 222; 322; 422) having a modifiable braking effect according to one of the preceding claims,
**characterized in that** the braking-field magnets (28; 128; 228; 328; 428) are arranged with a spacing from one another along the succession axis (F), forming a spacing region (42; 142; 242; 342; 442), which spacing region (42; 142; 242; 342; 442) extends along the succession axis (F) between the braking-field magnets (28; 128; 228; 328; 428), extends parallel to the polarization directions of the braking-field magnets (28; 128; 228; 328; 428) between the carrier side (28b; 128b; 228b; 328b; 428b) and induction side (28a; 128a; 228a; 328a; 428a), and extends orthogonally both to the succession axis (F) and to the polarization directions of the braking-field magnets (28; 128; 228; 328; 428) together with the braking-field magnets (28; 128; 228; 328; 428); the magnetic flux-changing means (52; 152; 252; 352; 452) being embodied to modify, as the at least one magnetic flux condition, the mass of ferromagnetic material (66; 170; 274) and/or the orientation of ferromagnetic material (276; 366) and/or the orientation of an additional magnetic field source (66; 266, 274; 366, 378; 478) in the spacing region.

6. The eddy current brake magnet arrangement (22; 122; 222) having a modifiable braking effect according to Claim 5,
**characterized in that** it comprises an influencing subassembly (67; 172; 275) that is movable relative to the braking-field magnets (28; 128; 228) and has a plurality of at least locally ferromagnetic influencing components (66; 170; 274); the magnetic flux-changing means (52; 152; 252) being embodied to shift the influencing subassembly relative to the braking-field magnets (28; 128; 228) between a first operating position retracted farther out of the spacing region (42; 142; 242) and a second operating position introduced farther into the spacing region (42; 142; 242).

7. The eddy current brake magnet arrangement (22; 122; 222) having a modifiable braking effect according to Claim 6, incorporating Claim 3,
**characterized in that** the influencing subassembly (67; 172; 275) and the control subassembly (50; 150; 250) are coupled for movement together in such a way that with a displacement of the control subassembly (50; 150; 250) between its attenuation position and its conduction position, a shift of the influencing subassembly (67; 172; 275) between its first and its second operating position occurs.

8. The eddy current brake magnet arrangement (122) having a modifiable braking effect according to one of Claims 6 or 7,
**characterized in that** at least one influencing component (170) encompasses soft-magnetic material; and/or at least one influencing component (66; 274) encompasses permanently magnetized ferromagnetic material having a polarization direction parallel to the succession axis (F).

9. The eddy current brake magnet arrangement (222) having a modifiable braking effect according to one of Claims 6 to 8,
**characterized in that** it comprises at least one respective flux-influencing magnetic configuration (276; 367) in spacing cavities (240; 340) that succeed one another along the succession axis (F) between braking-field magnets (228; 328) that succeed one another along the succession axis (F); the magnetic flux-changing means (252; 352) being embodied to modify, as the at least one magnetic flux condition, the orientation, relative to the braking-field magnets (228; 328), of the magnetic fields proceeding from the flux-influencing magnet configurations (276; 367).

10. The eddy current brake magnet arrangement (222) having a modifiable braking effect according to Claim 9,
**characterized in that** the flux-influencing magnet configurations (276) are movable relative to the braking-field magnets (228) along a movement path (268); each flux-influencing magnet configuration (276) comprising at least two flux-influencing magnets (266, 274) that have different polarization directions and succeed one another along the movement path (268); the magnetic flux-changing means (252) being embodied to move the flux-influencing magnet configurations (276) along the movement path (268) in such a way that with the movement of a respective first flux-influencing magnet (266) out of its spacing cavity (240), a respective second flux-influencing magnet (274) of the flux-influencing magnet configurations (276), having a polarization direction deviating from that of the first flux-influencing magnet (266), becomes moved into the spacing cavity (240).

11. The eddy current brake magnet arrangement (322) having a modifiable braking effect according to Claim 9,
**characterized in that** the flux-influencing magnet configurations (367) are rotatable around a rotation axis (R) relative to the braking-field magnets (328), the magnetic flux-changing means (352) being embodied to rotate the flux-influencing magnet configurations (367) around their respective rotation axis (R) so as thereby to change the orientation, relative to the braking-field magnets (328), of the magnetic field proceeding from said configurations.

12. The eddy current brake magnet arrangement (222; 322) having a modifiable braking effect according to Claim 10 or 11,
**characterized in that** flux-influencing magnet configurations (275, 276; 367) that succeed one another along the succession axis (F) are arranged with alternating polarization directions.

13. The eddy current brake magnet arrangement (322; 422) having a modifiable braking effect according to one of Claims 6 to 12,
**characterized in that** it comprises at least one respective magnetic flux-influencing electromagnet (378, 380; 478) at the braking-field magnets (328; 428) and/or in spacing cavities (340; 440) that succeed one another along the succession axis (F) between braking-field magnets (328; 428) that succeed one another along the succession axis (F), the magnetic flux-changing means (352; 452) being embodied to modify the energization of the electromagnets (378, 380; 478) in terms of magnitude and/or polarity.

14. An eddy current brake induction arrangement (24) encompassing a planar, electrically conductive induction part (30) having two main sides (30a, 30b) placed with respect to one another in a thickness direction of the induction part (30) at a distance from one another, and encompassing a ferromagnetic yoke component (32) carrying the induction part (30); the induction part (30) facing with its one main side (30b), constituting an installation side (30b), toward the yoke component (32), and facing with its other main side (30a), constituting an effective side (30a), toward an induction region (34) into which a magnetic field, proceeding from an eddy current brake magnet arrangement (22) that interacts inductively with the induction part (30), acts,
**characterized in that** the eddy current brake induction arrangement (24) encompasses, in order to modify its braking effect, induction effect-changing means (84) that are embodied to modify at least one magnetic flux condition in a region (86) of the eddy current brake induction arrangement (22) which extends from the effective side (30a) toward the yoke component (32), in particular to modify the magnetic field-guiding ferromagnetic mass (32b) of the yoke component (32), so as thereby to modify the magnetic flux density of a magnetic field in the induction region (34) and thus to modify the induction effect achievable with the eddy current brake induction arrangement (24) in the context of a predefined eddy current brake magnet arrangement (22) and predefined operating conditions.

15. An eddy current brake (20) having an adjustable braking effect, encompassing at least one magnet arrangement (22) and at least one induction arrangement (24) that interacts inductively therewith; the at least one magnet arrangement (22) and the at least one induction arrangement (24) being movable relative to one another along a relative movement path (B),
**characterized in that** the magnet arrangement (22) is an eddy current brake magnet arrangement (22) in accordance with one of Claims 1 to 13; and/or the induction arrangement (24) is an eddy current brake induction arrangement (24) according to Claim 14.

## Revendications

1. Agencement d'aimants de frein à courants de Foucault (22; 122; 222; 322; 422), comprenant un support d'aimants au moins partiellement ferromagnétique (26; 126; 226; 326; 426), qui le long d'un axe suivant (F) comprend une pluralité d'aimants de champ de freinage (28; 128; 228; 328; 428) successifs avec des directions de polarisation alternées qui sont respectivement orthogonales à l'axe suivant (F) et parallèles l'une à l'autre, où le support d'aimants (26; 126; 226; 326; 426) s'étend d'un côté d'aimant (26a; 126a; 226a; 326a; 426a) plus proche des aimants de champ de freinage (28; 128; 228; 328; 428) dans la direction loin des aimants de champ de freinage (28; 128; 228; 328; 428) et où les aimants de champ de freinage (28; 128; 228; 328; 428) s'étendent respectivement entre un côté de support (28b; 128b; 228b; 328b; 428b) plus proche du support d'aimants (26; 126; 226; 326; 426) et un côté d'induction (28a; 128a; 228a; 328a; 428a) plus loin du support d'aimants (26; 126; 226; 326; 426), le côté d'induction (28a; 128a; 228a; 328a; 428a) faisant face à une région d'induction (34; 134; 234; 334; 434) dans laquelle agit le champ magnétique des aimants de champ de freinage (28; 128; 228; 328; 428) s'étendant du côté d'induction (28a; 128a; 228a; 328a; 428a),
**caractérisé en ce que** l'agencement d'aimants de frein à courants de Foucault (22; 122; 222; 322; 422) comprend des moyens de modification de flux magnétique (52; 152; 252; 352; 452) pour modifier son effet de freinage, qui sont adaptés pour modifier dans une région (64; 164; 264; 364; 464) de l'agencement d'aimants de frein à courants de Foucault (22; 122; 222; 322; 422) s'étendant du côté d'induction (28a; 128a; 228a; 328a; 428a) vers le support magnétique (26; 126; 226; 326; 426) de l'agencement d'aimants de frein à courants de Foucault (22; 122; 222; 322; 422) au moins une condition de flux magnétique afin de modifier ainsi la densité de flux magnétique du champ magnétique émanant des aimants de champ de freinage (28; 128; 228; 328; 428) dans la région d'induction (34; 134; 234; 334; 434).

2. Agencement d'aimants de frein à courants de Foucault (22; 122; 222) avec une action de freinage variable selon la revendication 1,
**caractérisé en ce que** ledit support magnétique (26; 126; 226) supporte lesdits aimants de champ de freinage (28; 128; 228) dans une région de support (38; 138; 238), lesdits moyens de modification de flux magnétique (52; 152; 252) étant adaptés pour modifier la masse du matériau ferromagnétique dans ladite région de support (38; 138; 238) comme ladite au moins une condition de flux magnétique.

3. Agencement d'aimants de frein à courants de Foucault (22; 122; 222) avec une action de freinage variable selon la revendication 2,
**caractérisé en ce que** ledit support magnétique (26; 126; 226) comprend un module de support (46; 146; 246), et un module de commande (50; 150; 250) mobile par rapport audit module de support (46; 146; 246), lesdits modules (46, 50; 146, 150; 246, 250) comprenant chacun du matériau ferromagnétique, où lesdits moyens de modification de flux magnétique (52; 152; 252) sont adaptés pour déplacer le module de commande (50; 150; 250) entre une position d'affaiblissement plus éloignée de la région de support (38; 138; 238) et une position de conduit plus proche de la région de support (38; 138; 238).

4. Agencement d'aimants de frein à courants de Foucault (22; 122; 222) avec une action de freinage variable selon la revendication 3,
**caractérisé en ce qu'**au moins une partie (44a; 144a; 244a), de préférence une pluralité de parties, du module de support (46; 146; 246) est en saturation magnétique lorsque le module de commande (50; 150; 250) est dans la position d'affaiblissement de sorte que, en raison de la section ferromagnétique localement petite de ladite au moins une partie saturée, le flux magnétique possible dans cette section est limité à une valeur fortement réduite comparée à la position de conduit, et lorsque le module de commande (50; 150; 250) est en position de conduit, n'est tout simplement pas encore en saturation magnétique, ou/et **en ce que** le support magnétique (26; 126; 226) présente, au moins lorsque le module de commande (50; 150; 250) est en position d'affaiblissement, un entrefer (62; 162; 262), de préférence une pluralité d'entrefers (62; 162; 262), le volume total d'entrefer du support magnétique (26; 126; 226) étant plus grand lorsque le module de commande (50; 150; 250) est en position d'affaiblissement que lorsque le module de commande (50; 150; 250) est en position de conduit.

5. Agencement d'aimants de frein à courants de Foucault (22; 122; 222; 322; 422) avec une action de freinage variable selon l'une des revendications précédentes,
**caractérisé en ce que** lesdits aimants de champ de freinage (28; 128; 228; 328; 428) sont espacés le long dudit axe suivant (F) pour former une région d'espacement (42; 142; 242; 342; 442), ladite région d'espacement (42; 142; 242; 342; 442) s'étendant le long de l'axe suivant (F) entre les aimants de champ de freinage (28; 128; 228; 328; 428), parallèlement aux directions de polarisation des aimants de champ de freinage (28; 128; 228; 328; 428) entre le côté de support (28b; 128b; 228b; 328b; 428b) et le côté d'induction (28a; 128a; 228a; 328a; 428a) et s'étendant orthogonalement à la fois à l'axe suivant (F) et aux directions de polarisation des aimants de champ de freinage (28; 128; 228; 328; 428) avec les aimants de champ de freinage (28; 128; 228; 328; 428), les moyen de modification de flux magnétique (52; 152; 252; 352; 452) étant adaptés pour modifier, en tant que ladite au moins une condition de flux magnétique, la masse de matériau ferromagnétique (66; 170; 274) et/ou l'orientation du matériau ferromagnétique (276; 366) et/ou l'orientation d'une source de champ magnétique supplémentaire (66; 266, 274; 366, 378; 478) dans la région d'espacement.

6. Agencement d'aimants de frein à courants de Foucault (22; 122; 222) avec une action de freinage variable selon la revendication 5,
**caractérisé en ce qu'**il comprend un module d'influence (67; 172; 275) mobile par rapport aux aimants de champ de freinage (28; 128; 228) et comportant une pluralité de composants d'influence au moins partiellement ferromagnétiques (66; 170; 274), les moyens de modification de flux magnétique (52; 152; 252) étant adaptés pour déplacer le module d'influence par rapport aux aimants de champ de freinage (28; 128; 228) entre une première position de fonctionnement retirée plus fortement de la région d'espacement (42; 142; 242) et une seconde position de fonctionnement déplacée plus fortement dans la région d'espacement (42; 142; 242).

7. Agencement d'aimants de frein à courants de Foucault (22; 122; 222) avec une action de freinage variable selon la revendication 6, y compris la revendication 3,
**caractérisé en ce que** le module d'influence (67; 172; 275) et le module de commande (50; 150; 250) sont couplés pour un mouvement commun de telle sorte qu'avec un déplacement du module de commande (50; 150; 250) entre sa position d'affaiblissement et sa position de conduit, un ajustement du module d'influence (67; 172; 275) a lieu entre sa première position opérationnelle et sa deuxième position opérationnelle.

8. Agencement d'aimants de frein à courants de Foucault (122) selon l'une des revendications 6 ou 7,
**caractérisé en ce qu'**au moins un module d'influence (170) comprend du matériau magnétique doux et/ou **en ce qu'**au moins un module d'influence (66; 274) comprend du matériau ferromagnétique magnétisé en permanence avec une direction de polarisation parallèle à l'axe suivant (F).

9. Agencement d'aimants de frein à courants de Foucault (222) selon l'une des revendications 6 à 8,
**caractérisé en ce qu'**il présente respectivement au moins une formation d'aimants influençant le flux (276; 367) dans des régions d'espacement (240; 340) qui se suivent le long de l'axe suivant (F) entre des aimants de champ de freinage (228; 328) qui se suivent selon l'axe suivant (F), lesdits moyens de modification de flux magnétique (252; 352) étant adaptés pour changer l'orientation des champs magnétiques émanant des formations d'aimants influençant le flux (276; 367) par rapport auxdits aimants de champ de freinage (228; 328) en tant que ladite au moins une condition de flux magnétique.

10. Agencement d'aimants de frein à courants de Foucault (222) avec une action de freinage variable selon la revendication 9,
**caractérisé en ce que** lesdites formations d'aimants influençant le flux (276) sont mobiles le long d'un trajet de déplacement (268) par rapport auxdits aimants de champ de freinage (228), chaque formation d'aimants influençant le flux (276) comprenant au moins deux aimants influençant le flux (266, 274) de différentes directions de polarisation, successives le long dudit trajet de déplacement (268), lesdits moyens de modification de flux magnétique (252) étant adaptés pour déplacer lesdites formations d'aimants influençant le flux (276) le long dudit trajet de déplacement (268) de telle sorte qu'avec le déplacement d'un premier aimant respectif influençant le flux (266) hors de sa région d'espacement (240), un second aimant respectif influençant le flux (274) desdites formations d'aimants influençant le flux (276) est déplacé dans ladite région d'espacement (240) avec une direction de polarisation différente de celle dudit premier aimant influençant le flux (266).

11. Agencement d'aimants de frein à courants de Foucault (322) avec une action de freinage variable selon la revendication 9,
**caractérisé en ce que** lesdites formations d'aimants influençant le flux (367) peuvent tourner autour d'un axe de rotation (R) par rapport auxdits aimants de champ de freinage (328), lesdits moyens de modification de flux magnétique (352) étant adaptés pour faire tourner lesdites formations d'aimants influençant le flux (367) autour de leur axe de rotation respectif (R) pour ainsi changer, comme ladite au moins une condition de flux magnétique, l'orientation du champ magnétique qui en émane par rapport auxdits aimants de champ de freinage (328).

12. Agencement d'aimants de frein à courants de Foucault (222; 322) avec une action de freinage variable selon la revendication 10 ou 11,
**caractérisé en ce que** des formations magnétiques influençant le flux (275, 276; 367) successives le long de l'axe suivant (F) sont disposées avec des directions de polarisation alternées.

13. Agencement d'aimants de frein à courants de Foucault (322; 422) avec une action de freinage variable selon l'une des revendications 6 à 12,
**caractérisé en ce qu'**il comprend aux aimants de champ de freinage (328; 428) et/ou dans des régions d'espacement (340; 440) successives le long de l'axe suivant (F) entre des aimants de champ de freinage (328; 428) successives selon l'axe suivant (F) respectivement au moins un électroaimant influençant le flux magnétique (378, 380; 478), les moyens de modification de flux magnétique (352; 452) étant adaptés pour modifier la quantité et/ou la polarité du courant appliqué aux électro-aimants (378, 380; 478).

14. Agencement d'induction de frein à courants de Foucault (24), comprenant une partie d'induction plate conductrice de l'électricité (30) avec deux côtés principaux (30a, 30b) espacés l'un de l'autre dans la direction de l'épaisseur de la partie d'induction (30), et un module de rétroaction (32) ferromagnétique portant la partie d'induction (30), la partie d'induction (30) étant opposée au module de rétroaction (32) avec un côté principal (30b) en tant que côté de montage (30b) et étant opposée avec l'autre côté principal (30a) en tant que côté d'action (30a) à une région d'induction (34) dans laquelle agit un champ magnétique émanant d'un agencement d'aimants de frein à courants de Foucault (22) coopérant de manière inductive avec la partie d'induction (30),
**caractérisé en ce que** l'agencement d'induction de frein à courants de Foucault (24) comprend des moyens de changement d'effet d'induction (84) pour modifier son effet de freinage, qui sont adaptés pour modifier au moins une condition de flux magnétique dans une région (86) de l'agencement d'induction de frein à courants de Foucault (22) s'étendant du côté d'action (30a) dans la direction du module de rétroaction (32), en particulier pour modifier la masse ferromagnétique (32b) ayant le champ magnétique du module de rétroaction (32), afin de modifier ainsi la densité de flux magnétique d'un champ magnétique dans la région d'induction (34) et de modifier ainsi l'effet d'induction qui peut être obtenu avec l'agencement d'induction de frein à courant de Foucault (24) avec un agencement d'aimants de frein à courants de Foucault (22) prédéterminé et des conditions de fonctionnement déterminées.

15. Frein à courants de Foucault (20) à action de freinage réglable, comprenant au moins un agencement d'aimants (22) et au moins un agencement d'induction (24) coopérant par induction avec celui-ci, ledit au moins un agencement magnétique (22) et ledit au moins un agencement d'induction (24) étant mobiles l'un par rapport à l'autre sur une trajectoire relative (B),
**caractérisé en ce que** l'agencement d'aimants (22) est un agencement d'aimants de frein à courants de Foucault (22) selon l'une des revendications 1 à 13 et/ou **en ce que** l'agencement d'induction (24) est un agencement d'induction de frein à courants de Foucault (24) selon la revendication 14.
